# EUROPEAN PATENT APPLICATION

(11) **EP 4 571 587 A1**
(43) Date of publication of application: **18.06.2025**
(21) Application number: 24210783.7
(22) Date of filing: 05.11.2024
(51) Int. Cl.: G06N 3/08

(54) **INTELLIGENT NATURAL LANGUAGE QUERIES VIA LARGE LANGUAGE MODEL AND USER INTERFACE ELEMENT METADATA**

(30) Priority: 12.12.2023 US 202318537626
(71) Applicant: SAP SE, 69190 Walldorf (DE)
(72) Inventor: Khullar, Vipul, 69190 Walldorf (DE); Dumke, Jan, 69190 Walldorf (DE)
(74) Representative: Müller-Boré & Partner Patentanwälte PartG mbB

(57) **Abstract**

Natural language queries can be answered by using a large language model to find an appropriate user interface element appearing in an application. User interface element metadata can be incorporated when choosing the user interface element. Browser automation can then navigate to a page in the application on which the interface element appears, extract answer data, and then present the answer data as an answer to the natural language query. Input values can be supported, and a large language model can select a matching input value based on semantic matching, even if the natural language query does not have an exactly matching input value. Additional features such as pre-calculating embeddings, pre-determining candidate input values, and the like can be supported. The technologies can provide natural language access to web applications that can result in immediate access for new users and faster query execution by experienced users.

## Description

### FIELD

The field generally relates to computer user interfaces and natural language processing.

### BACKGROUND

Modern enterprise computing systems store vast amounts of information and support complex database queries on data to help manage the enterprise. However, there is a learning curve for software, and some enterprises have a large number of applications supporting various different functions, some of which may intersect or overlap in unintuitive ways.

Therefore, although data is available for queries, and there are applications for accessing such data, the data and resulting insights remain effectively unreachable due to the complexities involved in accessing the data.

Accordingly, there remains a need for improved processing of user queries.

### BRIEF DESCRIPTION OF THE DRAWINGS

FIG. 1 is a block diagram of an example system implementing intelligent natural language queries via a large language model and user interface element metadata.
FIG. 2 is a flowchart of an example method of implementing intelligent natural language queries via a large language model and user interface element metadata.
FIG. 3 is a block diagram of an example system building a graph representation of user interface elements and internal representations of user interface elements that incorporate user interface element metadata.
FIG. 4 is a flowchart of an example method of building a graph representation of user interface elements and internal representations of user interface elements that incorporate user interface element metadata.
FIG. 5 is a block diagram of an example graph representation of user interface pages of an application.
FIG. 6 is a block diagram of an example system building internal representations of user interface elements of an application incorporating user interface element metadata.
FIG. 7 is a flowchart of an example method of building internal representations of user interface elements of an application incorporating user interface element metadata.
FIG. 8 is a block diagram of an example system choosing a terminus user interface element based on embeddings and a large language completion model.
FIG. 9 is a flowchart of an example method of choosing a terminus user interface element based on embeddings and a large language completion model.
FIG. 10 is a block diagram of a system determining parameter input values for an application web page based on a natural language query.
FIG. 11 is a flowchart of an example method of determining parameter input values for an application web page based on a natural language query.
FIG. 12 is a block diagram of a system determining parameter input values based on candidate input values.
FIG. 13 is a flowchart of an example method of determining parameter input values based on candidate input values.
FIG. 14 is a block diagram of an example solution approach to implement the technologies described herein.
FIG. 15 is a block diagram of an example architecture for user interface graph generation that can be performed at design time.
FIG. 16 is a block diagram of an example architecture for label identification for a user query.
FIG. 17 is a screenshot of a user interface showing an example filter parameter.
FIG. 18 is a screenshot of an example user interface showing fixed values in value help.
FIG. 19 is a screenshot of an example user interface showing dynamic values in value help.
FIG. 20 is a screenshot of an example user interface showing a destination.
FIG. 21 is a block diagram of an example architecture implementing a destination approach.
FIG. 22 is a screenshot showing example extraction of a value help API via browser developer tools.
FIG. 23 is a screenshot showing example extraction of a value help API response via browser developer tools.
FIG. 24 is a block diagram of an example architecture implementing a developer tooling approach for input value help source determination.
FIG. 25 is a block diagram of an example architecture generating intelligent responses at runtime via a user interface graph.
FIG. 26 is a screenshot of an example launchpad user interface.
FIG. 27 is a block diagram of an example user interface graph snapshot.
FIG. 28 is a block diagram of an example computing system in which described embodiments can be implemented.
FIG. 29 is a block diagram of an example cloud computing environment that can be used in conjunction with the technologies described herein.

### DETAILED DESCRIPTION

### Example 1 - Overview

The sheer power of enterprise computing systems is typically accompanied by obstacles to using such power. However, as described herein, natural language query processing can be used to provide answers without having to become familiar with the application(s) underlying the effort to find such answers.

Harnessing large language models on user interface metadata for intelligent answering can revolutionize the way businesses interact and communicate with their customers and users. An extremely effective and intuitive query response system can be built by fusing the capabilities of large language models with the content offered by user interface metadata.

Labels within the user interface metadata can be a rich source of information about the business context. The comprehension of user inquiries can be improved, and precise responses can be produced by exploiting the user interface metadata and integrating it with large language models.

In addition, the systematic form of user interface metadata can be advantageous for large language models. Such models can retrieve real time information and create dynamic replies by mapping the user interface elements to the data sources or backend services.

Furthermore, it is possible to prompt the large language model successfully by utilizing user interface metadata. The large language model can be directed to focus on a certain component of the natural language query and produce a more tailored response by inserting UI-related prompt questions.

As described herein, a graph representation of a user interface can be generated along with internal representations of user interface elements that incorporate user interface metadata. Subsequently, when a natural language query is received at runtime, a matching user interface element can be found via a large language model. Navigation to the relevant page of an application can be achieved, and any parameter input values can be submitted as appropriate as part of navigation.

The presented answer can be extracted and rendered in natural language form.

Other techniques such as using vector embeddings and determining tenant-specific candidate parameter input values can be used as described herein.

The described technologies thus offer considerable improvements over conventional querying techniques.

### Example 2 - Example System Implementing Intelligent Natural Language Queries via a Large Language Model and User Interface Metadata

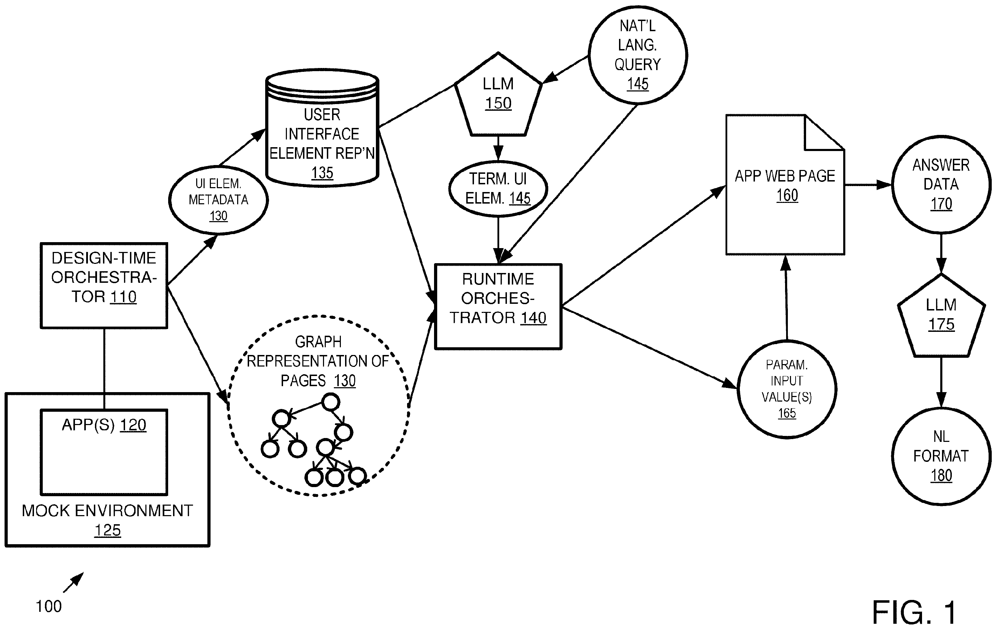

FIG. 1 is a block diagram of an example system 100 implementing intelligent natural language queries via a large language model and user interface element metadata that can be used in any of the examples herein. In the example, the system 100 is directed to leveraging the one or more applications 120, which are executed in a mock environment 125 by a design-time orchestrator 110 to generate a graph representation 130 of the pages of the applications 120 and internal representations 135 of user interface elements that incorporate user element metadata 125.

Although not shown, a large language model can participate in the design-time activity by classifying tags appearing in the applications (e.g., in HTML pages of an application), which can also assist in properly navigating among the pages of the applications 120 to build the graph representation 130.

Consequently, at runtime, a natural language query 145 is received by a runtime orchestrator 140. As described herein, a chatbot interface can be presented to a user, who enters the natural language query (e.g., in text form, spoken form, or the like). A large language model 150 is configured to identify a terminus user interface element 155 out of the elements represented in the representations 135 based on the natural language query 145. As described herein, vector embeddings can be used to reduce the number of candidate terminus matches that are considered by the large language model 150.

Depending on the configuration, browser automation can be used to navigate to the application web page 160 on which the terminus user interface element 145 appears. Parameter input values 165 can also be submitted, either to the page 160, or preceding pages (e.g., in input fields or as part of an URL as described herein), depending on where the input values are accepted within the application (e.g., as indicated in the graph representation). Although not shown, significant innovation can take place in determining candidate parameter input values, including using a large language model to identify them.

As a result of executing the application, answer data 170 can be extracted from the web page 160 (e.g., via the terminus user interface element 145). If desired, the answer data can be presented in natural language format 180 generated by a large language model 175, based on the answer data 170. Although not shown, in practice, the application can be integrated into a relational database management system, and the answer data can be derived from queries against database tables that support the underlying application, which serves as a portal to the database.

Any of the systems herein, including the system 100, can comprise at least one hardware processor and at least one memory coupled to the at least one hardware processor.

The system 100 can also comprise one or more non-transitory computer-readable media having stored therein computer-executable instructions that, when executed by the computing system, cause the computing system to perform any of the methods described herein.

In practice, the systems shown herein, such as system 100, can vary in complexity, with additional functionality, more complex components, and the like. For example, the graph representation 130 can include significantly more pages. There can be additional functionality within the graph building process, and a plurality of terminus user interface elements can be supported. Additional components can be included to implement security, redundancy, load balancing, report design, and the like.

The described computing systems can be networked via wired or wireless network connections, including the Internet. Alternatively, systems can be connected through an intranet connection (e.g., in a corporate environment, government environment, or the like).

The system 100 and any of the other systems described herein can be implemented in conjunction with any of the hardware components described herein, such as the computing systems described below (e.g., processing units, memory, and the like). In any of the examples herein, the graph representation 130, internal representations of user interface elements 135, answer data 170, and the like can be stored in one or more computer-readable storage media or computer-readable storage devices. The technologies described herein can be generic to the specifics of operating systems or hardware and can be applied in any variety of environments to take advantage of the described features.

### Example 3 - Example Method Implementing Intelligent Natural Language Queries via a Large Language Model and User Interface Metadata

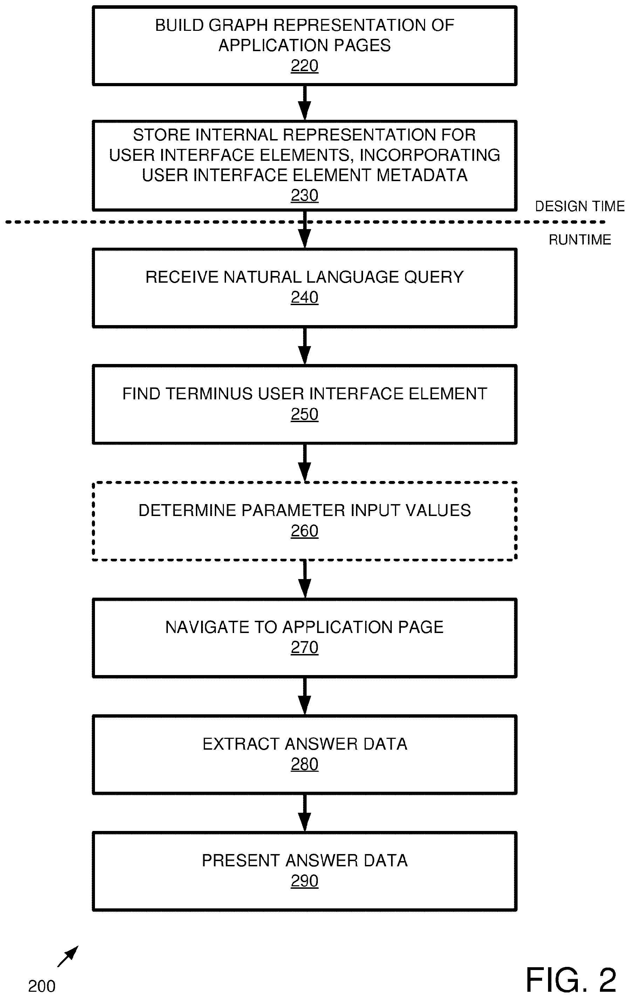

FIG. 2 is a flowchart of an example method 200 of implementing intelligent natural language queries via a large language model and user interface element metadata and can be performed, for example, by the system of FIG. 1. The automated nature of the method 200 can be used in a variety of situations such as automatically processing natural language queries by users and navigating within an application to determine an answer to the query. The design time and runtime portions of the method 200 can be performed independently, at different times, or by different entities.

In the example, at 220, a graph representation of the pages of one or more applications is built. As described herein, browser automation can be used to navigate within an application and classify tags appearing on pages (e.g., with a large language model). Tags appearing in the plurality of pages can be classified with a large language model as being of different element types, and such element types can comprise input, label, and button.

The graph representation can comprise edges indicating how to navigate between the plurality of pages. For example, clicking on a user interface element or entering a value can result in navigation from a first page to a second page.

At 230, internal representations of user interface elements appearing on the tags are stored, and the internal representation incorporates user interface element metadata. In practice, user interface labels (e.g., based on HTML tags appearing in application pages) can be stored. If desired, vector embeddings can be included in the internal representations (e.g., an internal representation of a user interface element has a respective embedding based on the user interface element metadata associated with the user interface element).

Although the building 220 and storing 230 are shown as occurring at design time, other implementations are possible. For example, if an application is updated, there may be multiple design time phases. Some pre-calculations or pre-computations can be done in advance of runtime to improve performance, while others can be done at runtime to reflect current data of the actual applications instead of the mock environment.

At runtime, a natural language query is received at 240. In practice, a chat (e.g., chatbot) interface is presented by which the natural language query can be input by text, audio, or the like. The natural language query can be vetted and/or parsed before being processed as an actual question.

At 250, a terminus user interface element can be determined (e.g., found) out of plurality of user interface elements of an application having a plurality of pages based on the natural language query. Such a determination can comprise finding, with a large language model, a user interface element (e.g., the terminus user interface element) best matching (e.g., semantically) the natural language query via internal representations of the user interface elements, wherein user interface element metadata is incorporated into the internal representations of the user interface elements.

As described herein, a large language model (e.g., completion model) can be used to choose the terminus user interface element. Vector embeddings can be used to reduce the number of user interface elements under consideration by the model. In practice, the user interface elements can be labels, and the terminus user interface element is the user interface element most relevant (e.g., best semantic match, as determined by a large language model) to the natural language query.

Thus, the internal representations of the user interface elements can comprise respective vector embeddings calculated based on the metadata incorporated into the internal representations of the user interface elements, and finding a matching user interface element comprises computing a vector embedding of the natural language query and, for the vector embedding of the natural language query, finding a matching vector embedding (e.g., top N matching (closest) embeddings) out of the respective vector embeddings, wherein the matching vector embedding is associated with the terminus user interface element. The large language model can comprise a completion large language model that chooses the terminus user interface element out of the top N matching embeddings. The respective vector embeddings can be pre-calculated before the natural language query is received.

At 260, for implementations involving parameter input values, such values can be determined. As described herein, a variety of techniques can be used to determine such values, including determining candidate parameter input values from value help, application programming interfaces, or the like.

At 270, browser automation navigates to a given page out of the plurality of pages of the application on which the terminus user interface element appears. As part of execution of the application, the answer data is then presented on the page. Although not shown, part of the navigation can include submitting parameter input values to the application so that the relevant answer data appears on the page.

Navigating to a given page out of the plurality of pages of the application on which the terminus user interface element appears can comprise finding the given page in a graph representation of the plurality of pages of the application, wherein the graph representation stores a path of the given page, and navigating to the path of the given page. Such a path can comprise a sequence of steps to the page (e.g., a starting page and one or more user interface actions to navigate from the starting page to the given page), a URL of the page, or both. In the case of a sequence of steps, browser automation can apply the one or more user interface actions at runtime to navigate to the given page.

At 280, answer data is extracted from the rendered page of the application for the terminus user interface element.

At 290, the answer data is presented as an answer to the natural language query. If desired, a natural language format can be presented as generated by a large language model. A large language model can generate a natural language answer with the value (e.g., based on the natural language query).

Parameter input values can be determined in a variety of ways as described herein. For example, one or more input value indications can be extracted from the natural language query, one or more parameter input values can be determined based on the input value indications, and the one or more parameter input values can be submitted to the application (e.g., as part of navigation). Determining parameter input values can comprise choosing from among a list of candidate input values with a large language model, based on the one or more input value indications. Such a list of candidate values can be fetched with an API call. The list of candidate values can be fetched from a list provided by the application in a user interface. Such candidate values can be prefetched before receiving the natural language query.

The method 200 and any of the other methods described herein can be performed by computer-executable instructions (e.g., causing a computing system to perform the method) stored in one or more computer-readable media (e.g., storage or other tangible media) or stored in one or more computer-readable storage devices. Such methods can be performed in software, firmware, hardware, or combinations thereof. Such methods can be performed at least in part by a computing system (e.g., one or more computing devices).

The illustrated actions can be described from alternative perspectives while still implementing the technologies. For example, receiving a parameter input value can be described as sending a parameter input value depending on perspective.

### Example 4 - Example Natural Language Query

In any of the examples herein, a natural language query can take the form of a question about enterprise data (e.g., related to any of the business domains described herein). Such queries typically parallel those posed to a database but can take a more natural language form such as, "Show open soybean contracts for December." Although not typically labeled as such, a query can contain parameters and values (e.g., contract status = open; commodity = soybeans; time period = December). The technologies herein can accept such natural language queries and provide an answer by navigating to a user interface page of an application. Along the way, parameter input values can be provided, and the resulting answer can be extracted (e.g., scraped) from the user interface page of the application that shows the answer.

In any of the examples herein, a natural language query can be input as text, audio, or the like. In practice, a textual representation can be used as input to the large language model.

### Example 5 - Example Domains

In any of the examples herein, the domain in which the applications operate can relate to specific business domains or functional areas. For example, a domain can focus on a particular aspect of business operations and offer a dedicated software solution to cater to the needs of the domain. Domains can include Enterprise Resource Planning (ERP) systems (e.g., finance, procurement, sales, manufacturing, supply chain management, and the like), Human Capital Management (e.g., employee management, payroll, talent acquisition, performance management, learning and development, and the like), customer experience (e.g., customer relationship management, marketing, sales, service, commerce, and the like), procurement and supply chain management (e.g., sourcing, procurement, supplier management, contract management, spend analysis, and the like), travel and expense management (e.g., booking, expense reporting, invoice processing, and the like), contingent workforce management and services procurement, intelligent asset management (e.g., asset management, maintenance, and field service), experience management solutions, analytics, and industry-specific domains such as retail, utilities, automotive, aerospace and defense, and the like. These are only examples, and many other domains can be supported.

### Example 6 - Example Terminus User Interface Element

In any of the examples herein, a terminus user interface element can be the user interface element (e.g., label) that is identified as most closely matching (e.g., semantically as determined by a large language model) the natural language query and also identifies where the answer can be found (e.g., in the label, in a field associated with the label, or the like). In practice, the terminus user interface element can be represented as a path (e.g., in the graph representation) or URL and effectively identifies an application and page as well. As part of navigation to the terminus user interface element, one or more parameter input values can be submitted to one or more pages, whether they be the ending page or one or more pages before the ending page.

For example, to navigate to a query page, various inputs may need to be entered. Then, at the query page, query filters may need to be input, then the query page displays the results after activating an "OK" button. The answer to the query then appears in the terminus user interface element or a user interface element identified by it.

### Example 7 - Example User Interface Element Metadata

In any of the examples herein, user interface metadata can include data besides the actual tag name of the tag itself. For example, metadata can include labels of the user interface element, tooltips of the user interface element, data types of the user interface element, valid actions for a user interface element, and possible user interactions. The metadata can help in understanding the context and semantics of different user interface components. In practice, such metadata can be attributes associated with a tag for a user interface element such as "type," "link," or the like. Tag names themselves can also be relevant. For example, "<HEAD>" can specify that the tag contains a description of the page, and the description can be included as metadata. Some user interface elements are visible, while others are not. Metadata for non-visible user interface elements can be included in the metadata, and hierarchical relationships are possible. For example, a field appearing on a page can be associated with metadata of the field and the page. Conversely, the metadata can then be associated with (e.g., mapped to) the field. Subsequently, when searching user interface elements, the metadata of the page on which the field appears can influence the outcome (e.g., a match with the metadata designates a match with the field).

### Example 8 - Example Large Language Model

In any of the examples herein, a large language model (LLM) can take the form of an artificial intelligence model that is designed to understand and generate human language. Such models typically leverage deep learning techniques such as transformer-based architectures to process language with a very large number (e.g., billions) of parameters. Examples include the Generative Pre-trained Transformer (GPT) developed by OpenAI, Bidirectional Encoder Representations from Transforms (BERT) by Google, A Robustly Optimized BERT Pretraining Approach developed by Facebook AI, Megatron-LM of NVIDIA, or the like. Pretrained models are available from a variety of sources.

In any of the examples herein, prompts can be provided to LLMs to generate responses. Prompts in LLMs can be initial input instructions that guide model behavior. Prompts can be textual cues, questions, or statements that users provide to elicit desired responses from the LLMs. Prompts can act as primers for the model's generative process. Sources of prompts can include user-generated queries, predefined templates, or system-generated suggestions. Technically, prompts are tokenized and embedded into the model's input sequence, serving as conditioning signals for subsequent text generation. Users can experiment with prompt variations to manipulate output, using techniques like prefixing, temperature control, top-K sampling, etc. These prompts, sourced from diverse inputs and tailored strategies, enable users to influence LLM-generated content by shaping the underlying context and guiding the neural network's language generation. For example, prompts can include instructions and/or examples to encourage the LLMs to provide results in a desired style and/or format.

### Example 9 - Example Parameter Input Values

In any of the examples herein, parameter input values can be determined and used as input for attributes (also known as "filters" or "fields"). An attribute can be identified by an attribute name, and the attribute value can be set by submitting the parameter input value to the application. As shown herein, submitting the parameter value can be achieved by placing it in a user interface element (e.g., input field), including it as part of an URL (e.g., a parameter embedded in the URL), or both. Hybrid implementations can be implemented where some parameters are submitted in user interface elements, and others are submitted as part of an URL.

In practice, more than one input parameter can be included in a natural language query. In cases where an attribute value is missing, the chat user interface can ask for values for the missing attribute value by attribute name.

As described herein, one of the strengths of using a natural language model to identify attribute names is that the user can specify the attribute name with a semantic equivalent, even if the name does not exactly match. (e.g., the large language model can identify an attribute "contract" from a natural language input containing "contrac"; or "purchase order number" from "PO No"; and the like).

As described herein, the parameter input values can be submitted to a user interface input attribute (e.g., "Bengaluru" is submitted in the City field) or as an URL (e.g., ?city=Bengaluru), or the like. In practice, more than one value can be supported (e.g., city = Bengaluru and month = January).

### Example 10 - Example System Building Graph Representation of User Interface Elements

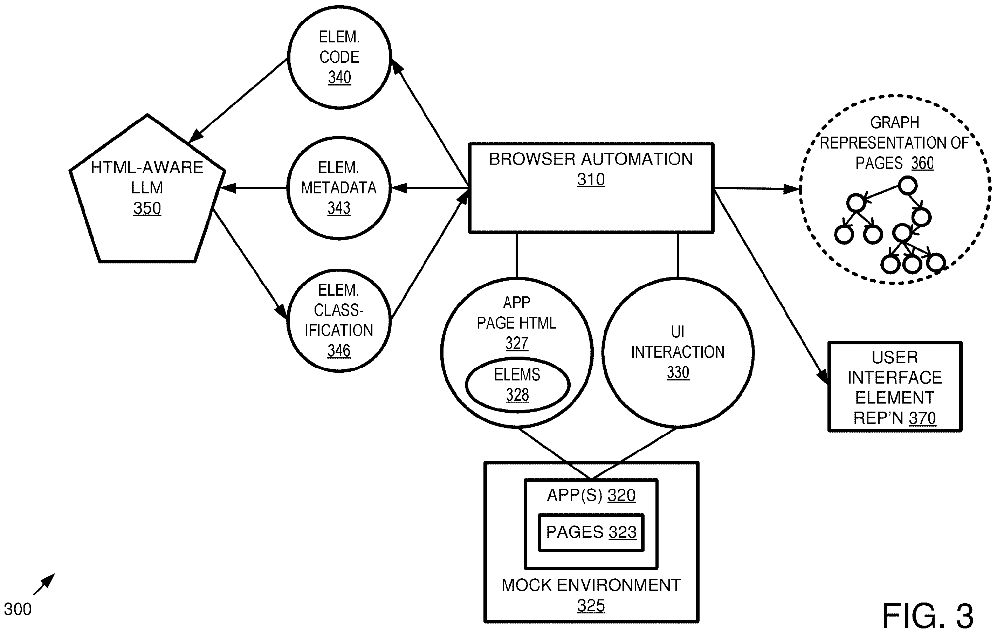

FIG. 3 is a block diagram of an example system 300 building a graph representation of user interface elements and internal representations of user interface elements that incorporate user interface element metadata that can be used in any of the examples herein (e.g., by the design-time orchestrator 110 to build the graph 130 and representations 135 of FIG. 1).

In the example, browser automation 310 can navigate within pages 323 of one or more applications 320, which are executed in a mock environment 325. For example, given the HTML of an application web page 327 containing user interface elements 328, browser automation 310 can send user interface interactions 330 to the applications to navigate to other pages. A graph representation 360 can keep track of the pages as nodes representing the user interface elements and edges representing their navigational relationships (e.g., how to navigate to another page).

Also, the user interface elements on the pages can be classified using an HTML-aware large language model 350 (e.g., a large language model with HTML context that has been trained on HTML). Given the HTML code 340 and user interface element metadata 343 of the user interface element appearing on a page out of the pages 323, the large language model 350 can provide a classification 346 (e.g., element type) of the element which is based on the element HTML code 340 (e.g., including the tag) and element metadata 343. Knowing the proper element type allows the browser automation 310 to determine how to better navigate within the pages 323 to build an accurate graph representation 360. The graph representation 360 can also represent input attributes (e.g., filters, input parameter names, and the like and where they are submitted). The graph representation can also indicate how the input parameter values are submitted (e.g., into user interface elements, embedded in an URL, or the like).

For example, input placeholders can be identified and persisted along with the graph. The persisted information can comprise the input element identifier and type along with the page identifier or URL in which the input element exists (e.g., appears).

As part of the navigation process, browser automation 310 can also generate internal representations 370 of the user interface elements encountered during navigation that are persisted for later use. The representations 370 can be based on and/or include the HTML code of the elements and incorporate metadata. In practice, the representations 370 can represent the labels of the pages 323. User interface elements can be classified as element type "label" via the large language model 350 as described.

Although the technologies can work with a single application, multiple applications can be supported. For example, browser automation 310 can navigate among multiple applications (e.g., appearing on a launchpad, list of applications, or the like).

In practice, the graph representation 360 and user interface element representations 370 can be generated based on a test or generic version of the one or more applications. They can then be subsequently used in a multi-tenant environment; however, some data-specific (e.g., tenant-specific) configuration can be performed as described herein to accommodate the situation in which different tenants have different underlying data (e.g., parameter input values).

### Example 11 - Example Method of Building Graph Representation of User Interface Elements

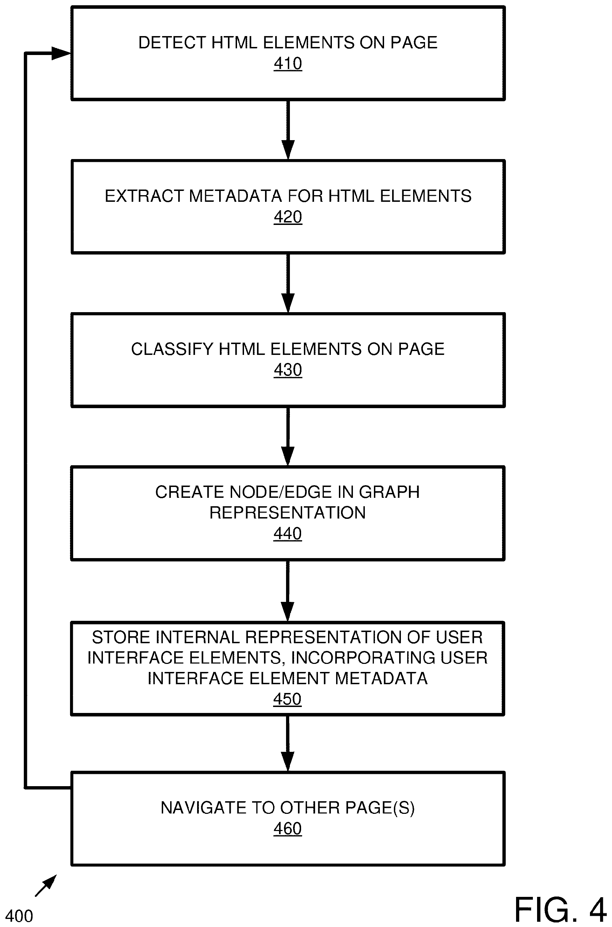

FIG. 4 is a flowchart of an example method 400 of building a graph representation of user interface elements and internal representations of user interface elements that incorporate user interface element metadata and can be implemented in any of the examples herein (e.g., the system shown in FIG. 3, browser automation, design time orchestrator, or the like).

The method 400 can be performed on the pages navigated to during browser automation to build a graph representation of the applications. In the example, nodes are pages in the applications, and edges indicate how to navigate from page to page. In the example, at 410, HTML elements are detected on the page. Metadata for the HTML elements can be extracted at 420. Then, the HTML elements can be classified at 430 (e.g., with a large language model based on the metadata).

At 440, a node is created in the graph representation for the page. When navigating to another page, an edge is created. Information on how to navigate to another page via the edge can be associated with the edge (e.g., to click on a button, link, or the like).

Also, at 440, as part of navigation, internal representations of the user interface elements (e.g., labels and the like) can be stored that incorporate user interface element metadata.

An attempt to navigate to other pages can be made by activating those elements identified as page-navigation elements. If there are additional pages, navigation to the pages can be done at 460, and the method 400 can be performed for the other page (e.g., recursively).

Navigation can continue exhaustively until a complete set of pages within the one or more applications have been visited.

During navigation, information about input attributes (e.g., filters, input parameter names, and the like) can be collected and included in the graph representation. Such information can be used subsequently to determine where input values are to be placed to determine an answer to the natural language query.

### Example 12 - Example User Interface Element Types

In any of the examples herein, user interface elements can be classified into types as described herein. Such types include text input, radio button, checkbox, dropdown value help, label, input value, button, action, navigation link, and the like. In practice, many other user interface element types can appear.

### Example 13 - Example Graph Representation of Application Pages

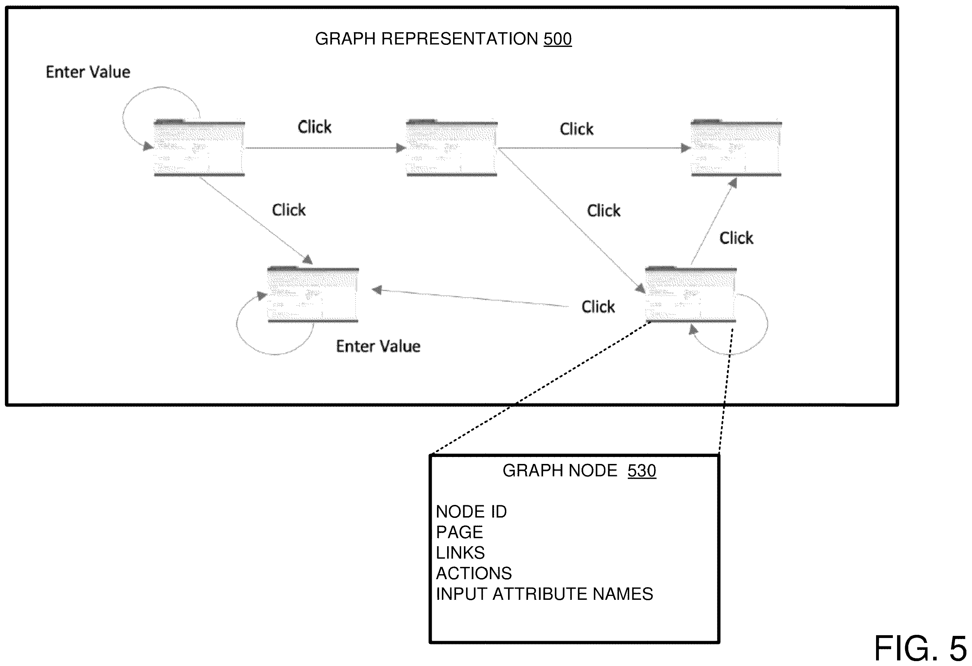

FIG. 5 is a block diagram of a graph representation 500 of user interface pages of an application and can be constructed using the technologies described herein (e.g., via browser automation). In the example, a graph representation 500 represents the pages of one or more application. Edge information can indicate how to navigate from one page to another (e.g., client, enter a value, or the like). The graph can represent the possible navigation paths in the one or more applications, links, actions, and parameter input values (e.g., where parameter input values can be submitted). In addition to the possible paths, the interactions with the user interface (e.g., clicking buttons, entering values into fields, etc.) can be represented.

In practice, a special node can be used to represent an application (e.g., or the root page of an application), with pages for the application appearing under the special node.

A graph node 530 can comprise information such as a unique node identifier, a page name, links to other pages, actions that can be taken on the page, input attribute names, and the collection of user interface elements appearing on the page. User interface element metadata can be incorporated.

### Example 14 - Example System Building Internal Representations of User Interface Elements

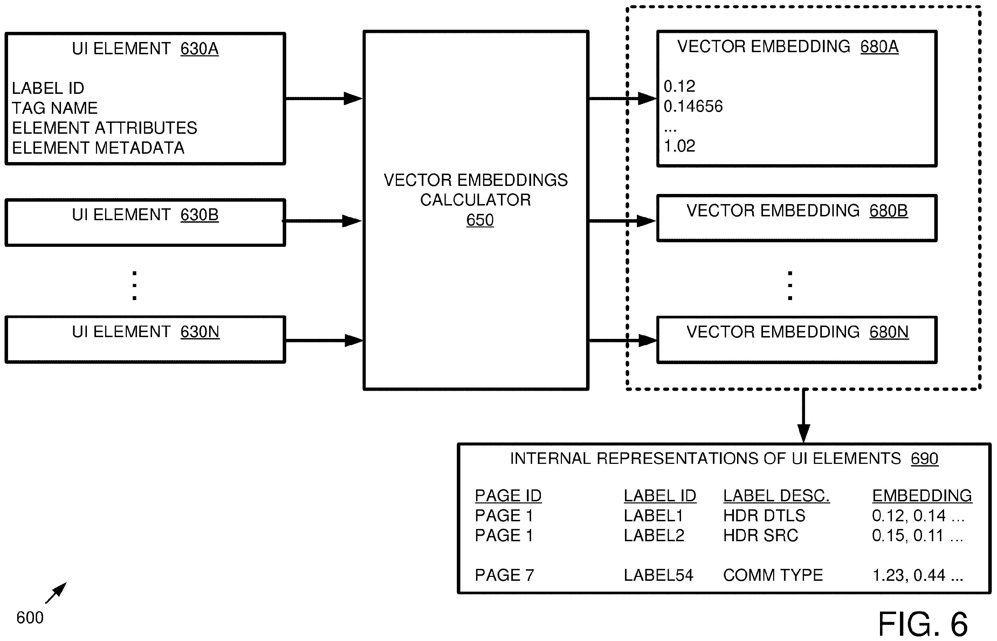

FIG. 6 is a block diagram of an example system 600 building internal representations of user interface elements of an application incorporating user interface element metadata. In the example, vector embeddings are calculated for the user interface elements based on user interface element data for respective of the user interface elements.

A vector embeddings calculator 650 (e.g., large language model that generates embeddings as output) can accept user interface elements 630A-N as input and generate respective vector embeddings 680A-N, which are then stored as internal representations of the user interface elements 690. As shown, the representations incorporate user interface element metadata (e.g., the vector embedding is calculated for a given user interface element based on the user interface element metadata of the given user interface element).

In practice, the vector embeddings calculations can be limited to those user interface elements of interest (e.g., label type user interface elements).

One advantage of having the vector embeddings is that a top N candidate user interface elements can be determined quickly by calculating an embedding for the natural language query and matching it against the representations 690. Then, a large language completion model can choose the most relevant user interface element from among the top N candidates. Otherwise, using a large language completion model on the entire set of user interface elements 630A-N may result in unacceptable wait time for the response to the query.

However, an implementation that does not calculate embeddings but merely submits the user interface elements to the large language model to determine a match against the query can be supported. Or, a different technique for narrowing the candidates can be used.

### Example 15 - Example Method Building Internal Representations of User Interface Elements

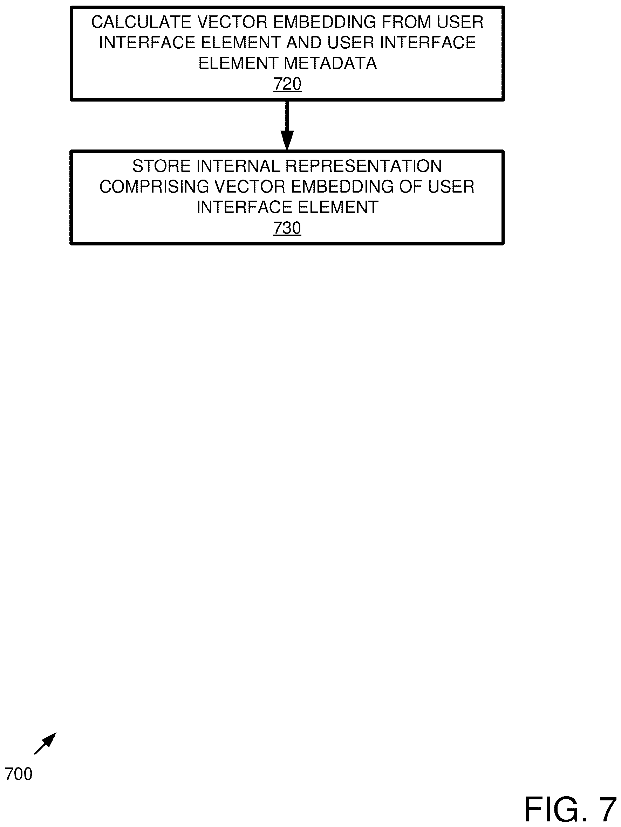

FIG. 7 is a flowchart of an example method 700 of building internal representations of user interface elements of an application incorporating user interface element metadata and can be performed, for example, by the system of FIG. 6.

In the example, at 720, vector embeddings are calculated for a user interface element based on the user interface element and the metadata of the user interface element. At 730, a representation comprising the vector embedding of the user interface element is stored for the user interface element as an internal representation of the user interface element.

The method 700 can be repeated for other user interface elements of the pages of the one or more applications. In practice, calculations can be limited to those user interface elements of interest (e.g., label type user interface elements).

### Example 16 - Example System Choosing a Terminus User Interface

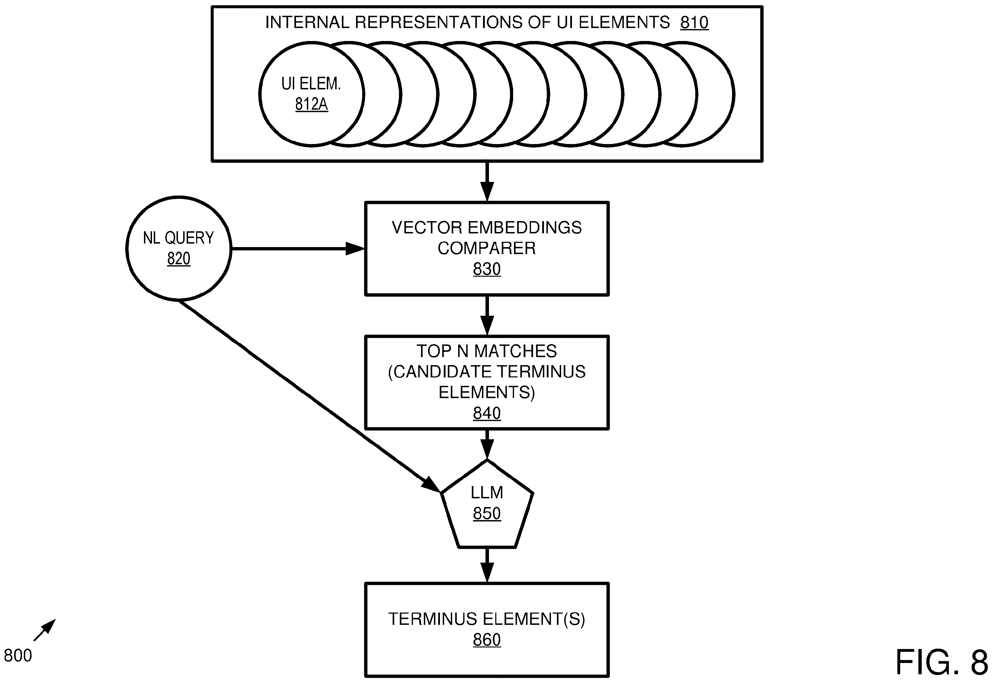

FIG. 8 is a block diagram of an example system 800 choosing a terminus user interface element based on embeddings and a large language completion model. The system 800 can be implemented at run time to determine a terminus user interface element for an input natural language query (e.g., for use as the terminus user interface element 145 as shown in FIG. 1). In practice, the terminus user interface elements can be represented as paths (e.g., to the page on which the terminus user interface appears).

In the example, a large number of possible terminus elements are shown as internal representations 810 of user interface elements (e.g., user interface element representation 812A). An embedding can be calculated for the natural language query 820 (e.g., by the comparer 830 or beforehand), and the embeddings comparer 830 can find the top N matches 840 among the representations 810. The comparer 830 can implement vector comparison (e.g., KD-Tree, Ball Tree, Locality-Sensitive Hashing, Indexing, parallelization, or the like) to find the top N matches.

A large language model 850 can be used to find the best match of the natural language query 820 against the top N matches 840, and the one or more terminus elements 860 can be output.

Because the terminus element can be represented as a path in the graph representation, knowing the terminus elements allows the system to navigate to the terminus elements to determine an answer to the input natural language query.

If the large language model 850 is sufficiently powerful, it can be used without assistance of the vector embeddings.

### Example 17 - Example Method of Choosing a Terminus User Interface Element

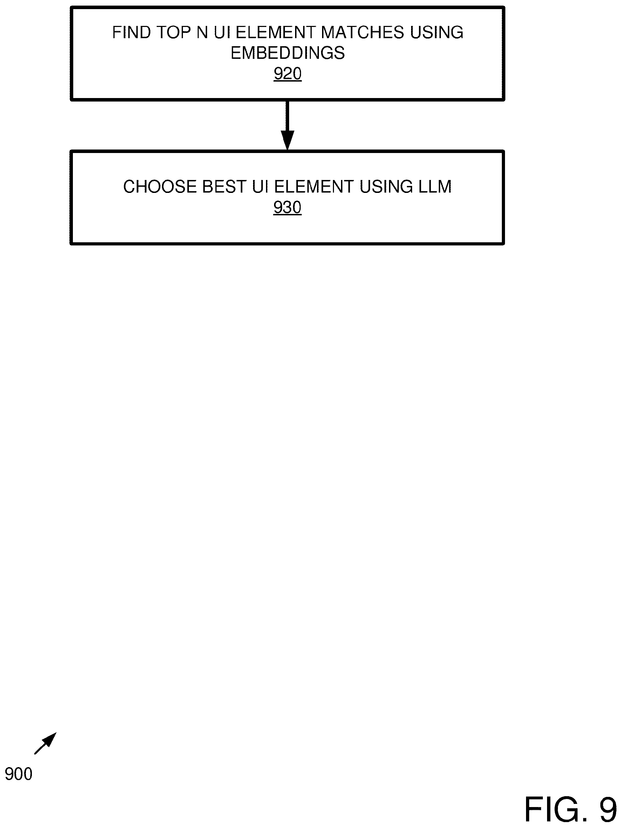

FIG. 9 is a flowchart of an example method 900 of choosing a terminus user interface element based on embeddings and a large language completion model and can be implemented, for example, by a system such as that shown in FIG. 8.

At 920, the top N user interface element matches are found using vector embeddings. For example, internal representations of the user interface elements with vector embeddings calculated based on user interface element metadata for respective of the elements can be matched against a vector embedding of a natural language query to find the top N matches for the natural language query (e.g., based on how well the vector embeddings match, such as by a distance function).

Then, at 930, the best user interface element out of the top N user interface elements is chosen as the terminus user interface by a large language model. In practice, more than one user interface element can be chosen.

In practice, the user interface elements considered can be limited to those of the label type.

As described herein, navigation can then proceed to the terminus user interface (e.g., the page on which the terminus user interface appears). For example, the graph user interface can be used to determine how to navigate to the page, either by progressing through the graph, navigating directly to the page, or both (e.g., navigating directly to a page and then proceeding to the terminus page).

### Example 18 - Example Determination of Terminus User Interface Element

As described herein, a large language model can choose the best matching user interface element as the terminus user interface element based on the internal representation of the user interface element. Although the term "match" is used, in practice, an exact match need not be found. Instead, a semantic similarity measure can be used, and the user interface element that is most semantically similar to the natural language query can be found as a best match. Thus, the large language model performs semantic matching that goes beyond exact matches.

As described herein, user interface metadata associated with the user interface element can be included in the match analysis. Such an approach allows accurate determination of the user interface element most likely to answer the natural language query. Application, page, and labels can be included in the match analysis because they contain textual information corresponding to the data that is located on the page and within the element.

As described herein, the candidates can be narrowed by using vector embeddings. A large language model can then choose the best matching user interface element from among the remaining candidates.

### Example 19 - Example System Determining Parameter Input Values

In some cases, a parameter input value may be involved as part of answering the natural language query. For example, filter values or other information may be included in the query. It can sometimes be challenging to determine the exact parameter input value, especially because parameter input values can depend on the underlying data in a database, which can vary from tenant to tenant. For example, one tenant may have factories in various cities in Japan, and another tenant may have factories in various cities in Germany. So, a query related to factory name may involve one of the factory names, which could be different or differently named (e.g., even for the same city) from tenant to tenant. Accordingly, the technologies can accommodate parameter input values as described herein.

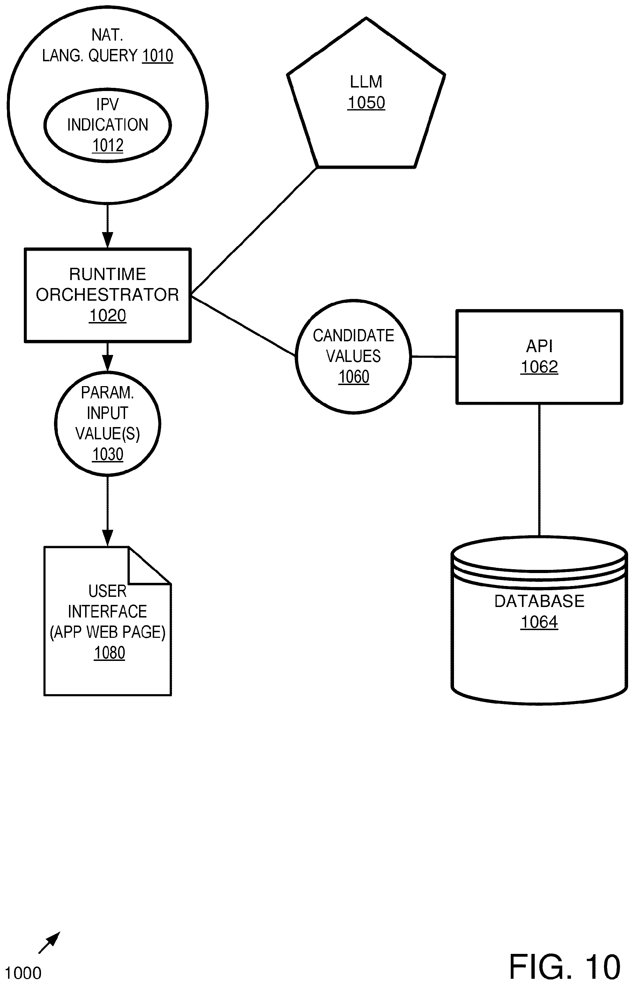

FIG. 10 is a block diagram of an example system 1000 determining parameter input values for an application web page based on a natural language query and can be implemented, for example, by the system 100 of FIG. 1 (e.g., by the runtime orchestrator). In the example, a natural language query 1010 comprises an indication 1012 of an input parameter value. The runtime orchestrator 1020 can work with the large language model 1050 to determine the attribute name / attribute values pairs within the query 1010, and use the large language model to choose one of the candidate values 1060 as a parameter input value 1030. The output 1030 can include both the attribute name and the attribute value (e.g., City, Bangalore).

In some cases, the large language model 1050 can also be used to find an API 1062 based on the entity (e.g., City). The API can be used to fetch candidate values 1060 from a database 1064. However, in other cases, the candidate values 1060 can be fixed (e.g., yes, no, maybe). Candidate values 1060 can be fetched from a user interface (e.g., a dropdown menu of choices, a list of values, or the like).

The parameter input value(s) 1030 can then be submitted to a user interface (e.g., application web page 1080). As described herein, submission can be as an input attribute (e.g., "Bengaluru" is submitted in the City field) or as an URL (e.g., ?city=Bengaluru), or the like. In practice, more than one value can be supported (e.g., city = Bengaluru and month = January).

The candidate values 1060 can be determined and stored in advance of receiving the natural language query to improve performance. For example, after navigation to an input field, the list of possible input values can be determined and stored for use at runtime. Candidate values 1060 can be drawn from actual data of the tenant (e.g., a production database) so that they match the possible values at runtime.

An advantage of using the large language model 1050 to determine the parameter input value(s) 1030 is that the indication 1012 in the natural language query 1010 may not exactly match the database (e.g., "List orders for BLR"), but the large language model can leverage its semantics capabilities to identify a match (e.g., "Bengaluru"). Subsequently, using the identified parameter input value (e.g., "Bengaluru") in the application will lead to the intended result (e.g., city = Bengaluru).

### Example 20 - Example Method of Determining Parameter Input Values

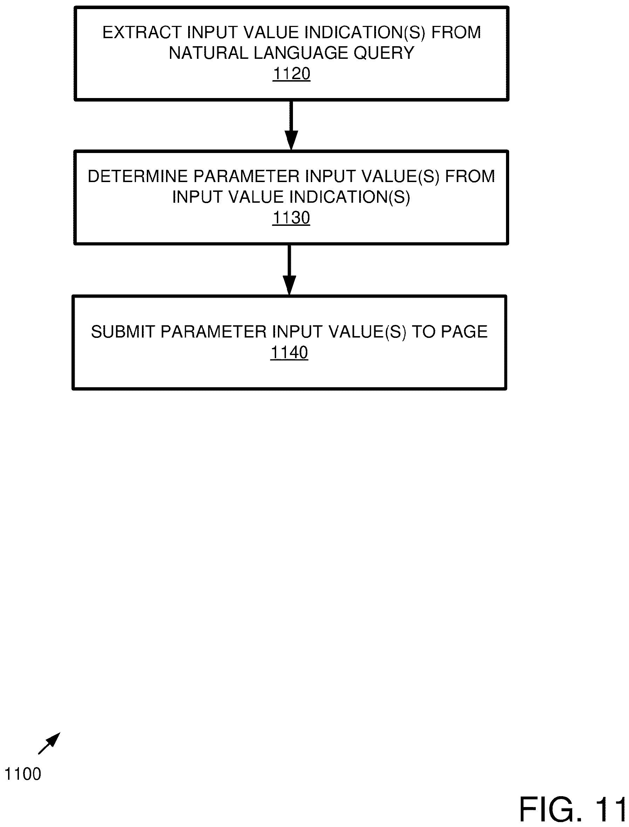

FIG. 11 is a flowchart of an example method 1100 of determining parameter input values for an application web page based on a natural language query and can be implemented, for example, by a system such as that shown in FIG. 10.

At 1120, one or more parameter input value indications are extracted from the natural language query. At 1130, one or more parameter input values are determined from the one or more parameter input value indications. As described herein, the parameter input values can be chosen by a large language model based on the indications from a list of candidate parameter input values. Such candidates can be prefetched before runtime before the natural language query is received. For example, values can be prefetched using an API, from a user interface, or the like.

At 1140 the parameter input values can be submitted to a page of the application (e.g., the page on which the terminus user interface element appears, or before in navigation to the terminus user interface element). The page then provides an answer to the query, which can be extracted as described herein.

In some cases (e.g., where data is extracted from an API against an underlying tenant-specific database), the process can be performed per tenant, and the candidate values can be stored per tenant. In such a way, the candidate input values can match those in the underlying database at runtime. Thus, per-tenant candidate input value determination can be performed, and the values stored separately per tenant.

### Example 21 - Example System Determining Parameter Input Values Based on Candidates

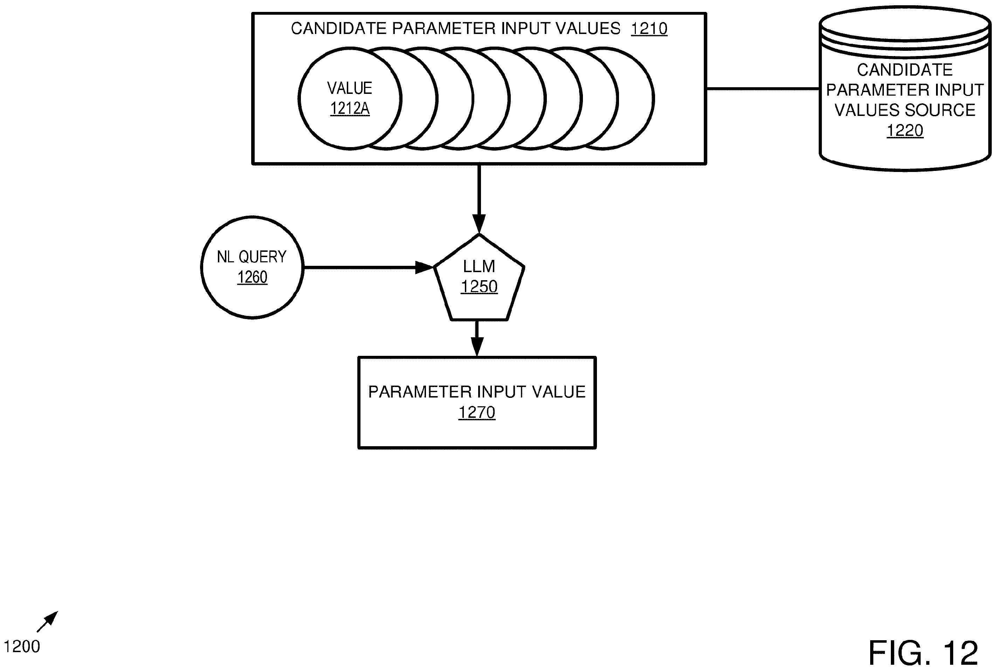

FIG. 12 is a block diagram of an example system 1200 determining parameter input values based on candidate input values that can be used in any of the examples herein for determining parameter input values for an application web page. In the example, a plurality of candidate parameter input values 1210 (e.g., value 1212A and the like) are drawn from a candidate parameter input value source 1220. Based on the natural language query 1260 (e.g., an indication of the value), a large language model 1250 chooses the parameter input value 1270 (e.g., from among the candidates 1210).

### Example 22 - Example Method of Determining Parameter Input Values Based on Candidates

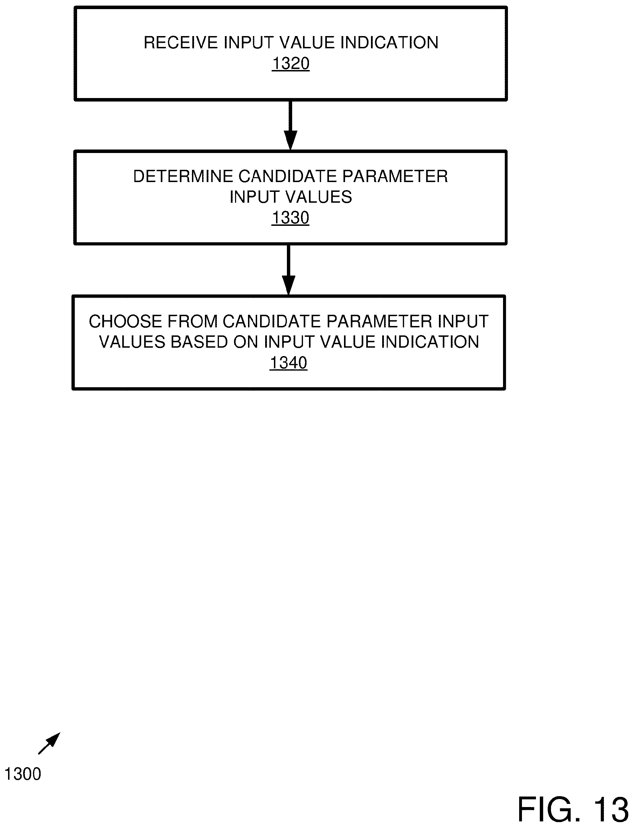

FIG. 13 is a flowchart of an example method 1300 of determining parameter input values based on candidate input values and can be performed, for example, by the system of FIG. 12.

At 1320, an input value indication is received, typically as part of a natural language query. Parsing can be performed on the query to obtain such an indication.

At 1330, candidate parameter input values are determined. As described herein, such candidate parameter input values can be fetched before the natural language query is received at runtime.

At 1340, a parameter input value is chosen from the candidate parameter input values based on the input value indication by a large language model.

### Example 23 - Example Solution Approach for Implementation

An example solution approach involves leveraging user interface metadata to prepare a graph of the whole user interface. The graph can be leveraged for traversing to the appropriate user interface page and then to the appropriate element on the page to answer or act upon the user's query. The overall approach can be split into two aspects: design time and runtime.

During design time, a graph can be prepared for a given set of web applications. The graph can comprise nodes as pages and sequence of actions as directed edges. The complete graph of the web application can be created using browser automation tools like Selenium that traverse the web application(s) and create a graph representing the application(s). The system is logged into using Selenium, and a starting page is scanned for actionable elements. Then combinations of the actionable elements are created and a path that comprises the sequence of actions to be performed on a web page is prepared. The actions are executed using Selenium to navigate to a destination (next) page, where the process is repeated recursively, until the entire web application is traversed, and the entire graph is created. Design time can also include identifying candidate input values for the filter values / input fields that are part of the sequence of actions.

At runtime, the entire list of paths, sequences of actions, and possible input values are available. The most appropriate location (e.g., web page and element) is identified where information answering the user's natural language query can be found (e.g., a terminus user interface element). Then, using the browser automation tool, navigation to the exact page passing the relevant input values wherever needed is performed. The answer to the user's query can be extracted from the HTML code.

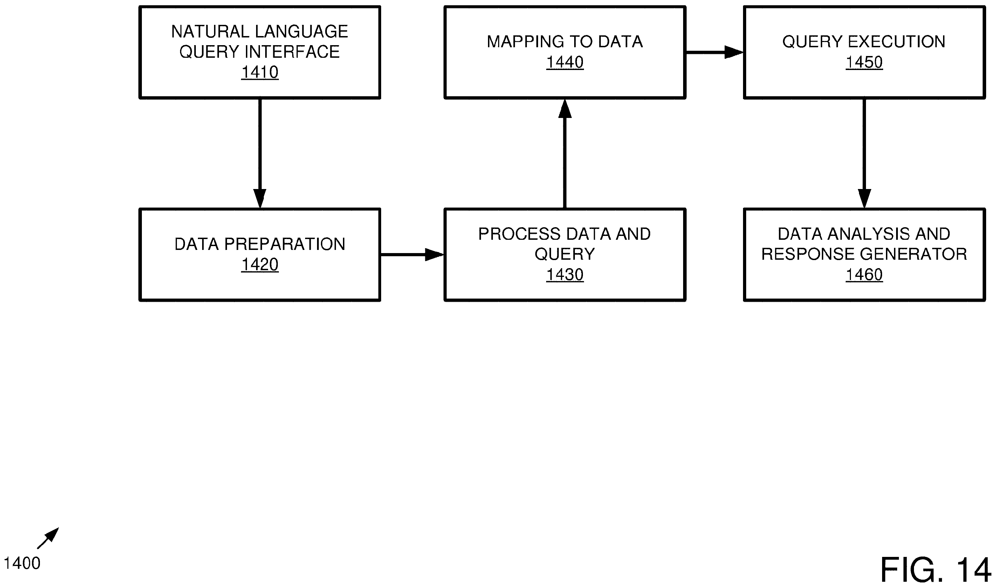

FIG. 14 is a block diagram of an example solution approach 1400 to implement the technologies described herein that can be used in any of the examples herein.

At 1410, a natural language query interface is provided for business users to input their natural language queries.

At 1420, the business data is organized and prepared in the form of a graph: a node represents a web page, and a node represents actions (e.g., to navigate to another page by clicking, entering a value, or the like).

At 1430, web pages and the user query are processed, and vector embeddings are calculated for them.

At 1440, the query is mapped to the data. A similarity score of the vector embeddings is generated and the top N most similar paths (e.g., represented by a terminus node) along with data are fed to a large language model, which chooses the most appropriate terminus user interface element (e.g., represented as a path).

At 1450, after reaching the intended page on which the terminus user interface element appears, the large language model is prompted to scan the user query again to retrieve keywords that might be needed to be provided to the application page or a page preceding it. Such data can be entered into the appropriate page(s).

At 1460, after the data is retrieved (e.g., extracted from the HTML or user interface), the large language model is prompted to generate a human-readable response in natural language format that answers the user's query.

### Example 24 - Example Architecture for UI Graph Generation

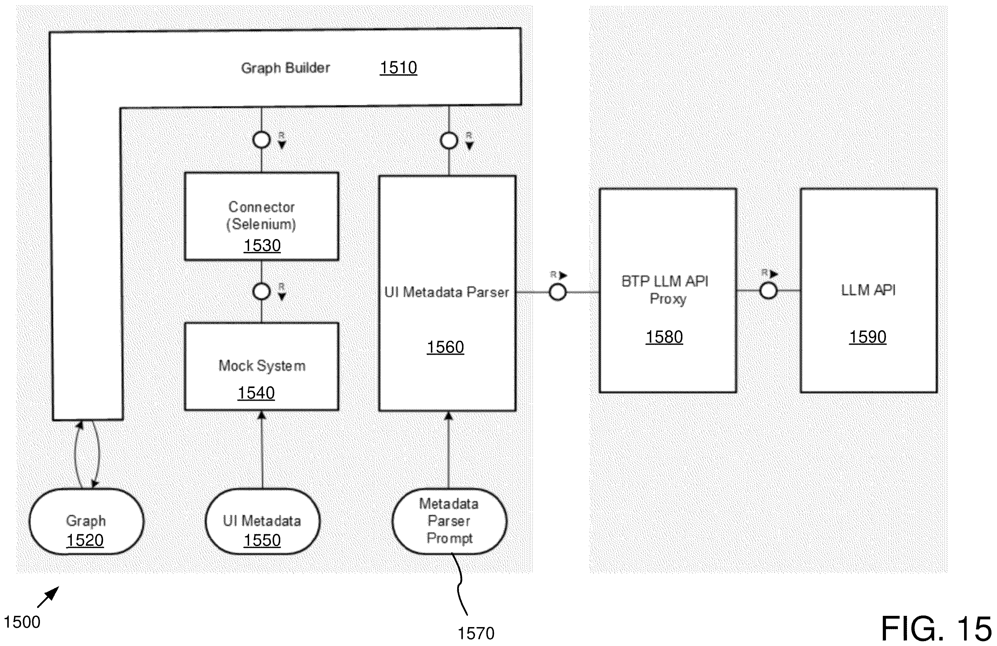

During design time, a mock system can be prepared, the automation (e.g., connector) tool can be set up, a user interface graph can be generated, user interface metadata can be extracted, tags on pages can be classified, and vector embeddings can be generated for labels appearing on the pages. FIG. 15 is a block diagram of an example architecture 1500 for user interface graph generation that can be performed at design time that can be used in any of the examples herein.

A mock system 1540 can be prepared with the possible user interface applications and an appropriate backend server. The mock system 1540 can be an existing sandbox/development system with sufficient data so that the various permutations of navigation (e.g., possible navigation paths through the application(s)) can be simulated. A technical user account with the appropriate authorizations can be created for the purpose of logging in and traversing the user interface applications.

An automation tool (e.g., connector) 1530 can be setup. For example, an automation tool such as Selenium or the like can be setup and configured with the help of existing libraries such as selenium.webdriver in Python or other language. The connector can be used to log on to the system and automatically traverse the user interface mock applications step by step. The traversed steps can be persisted in the form of a user interface graph 1520.

As shown, the graph builder 1510 can do the work of orchestrating navigation within the applications in the mock system 1540 to generate the graph 1520.

User interface metadata 1550 can be incorporated into the process and parsed by a parser 1560 according to the prompt 1570, which can be fed to the large language model 1590 via a proxy 1580.

To achieve generation of the graph representation of the user interface, a portal/launchpad (e.g., starting page) can be logged into with the help of the technical user account using the automation tool. Thereafter, the user interface applications on the launchpad are traversed automatically using the test automation tool to create a comprehensive graph of user interface navigation, links, actions, and input values. The graph represents the possible paths and interactions within the user interface. Mock data can be used to achieve navigation.

Various approaches can be used to generate the user interface graph: sequence of steps, URLs for pages, and hybrid approach.

### Example 25 - Example UI Graph Generation: Sequence of Steps (Path Navigation)

In any of the examples herein, a sequence of steps (e.g., navigation of a path to reach the page) can be used. The graph representation can be created and persisted with a sequence of steps, the page id, the action performed on the page, and the next page id that was rendered after the action was executed. In some cases, mandatory input values are needed, and they can be identified using the input for value help features described herein.

**Table 1 - Represented Pages in Graphical Representation**

| **Page ID** | **Action** | **Next Page ID** |
|---|---|---|
| Page1 | Link_Page2 | Page2 |
| Page2 | Link_Page3 | Page3 |
| Page2 | Link_Page4 | Page4 |
| Page4 | Back_Button | Page2 |

An advantage to such an approach is that it is easily adaptable to any type of user interface. However, it is not the most performant in scenarios where direct navigation to the desired page might be possible (e.g., as described next).

### Example 26 - Example UI Graph Generation: URLs for Pages

In any of the examples herein, a URL can be used to navigate to the page. One can automatically traverse the user interface pages and identify URLs for the pages, which are easily extracted via test automation tools. There can be one or more input parameters (e.g., filter parameters) associated with the URL such as key fields. The value of filter parameters can be derived using the input for value help features described herein.

**Table 2 - Represented Pages in Graphical Representation**

| **Page ID** | **Page URL** | **Filter Parameters** |
|---|---|---|
| Page1 | Page1@xyz.com | Key1, Key2 |
| Page2 | Page2@xyz.com | Key3 |

An advantage to such an approach is that it is more performant (e.g., faster) because a sequence of steps need not be performed at runtime to reach the designated page. However, not all applications support such filter-based navigation to all pages.

### Example 27 - Example UI Graph Generation: Hybrid Approach

In any of the examples herein, a hybrid approach can be taken. A hybrid approach can be preferable because it can be applied based on the use case and restrictions of the user interface. During graph creation, values in both the tables can be persisted as shown below.

For applications where URL-based navigation is possible for a page, approach 2 can be leveraged, and approach 1 can be leveraged for other applications.

**Table 3 - Represented Pages in Graphical Representation: Approach 1 (Path).**

| **Page ID** | **Action** | **Next Page ID** |
|---|---|---|
| Page1 | Link_Page2 | Page2 |
| Page2 | Link_Page3 | Page3 |
| Page2 | Link_Page4 | Page4 |
| Page4 | Back_Button | Page2 |

**Table 4 - Represented Pages in Graphical Representation: Approach 2 (URL).**

| **Page ID** | **Page URL** | **Filter Parameters** |
|---|---|---|
| Page1 | Page1@xyz.com | Key1, Key2 |
| Page2 | Page2@xyz.com | Key3 |

### Example 28 - Example Implementation: Metadata Extraction

During graph creation, relevant HTML metadata associated with user interface elements, such as labels, tooltips, data types, and possible user interactions can be extracted and associated with the path. The metadata can help in understanding the context and semantics of different user interface components.

### Example 29 - Example Implementation: Tag Classification

Based on the metadata extracted on a given page, the tags on the page can be classified into elements based on type (e.g., label, input value, action, navigation link, and the like.)

**Table 5 - Tag Classification**

| **Tag ID** | **Element Type** |
|---|---|
| Input_123 | Input |
| Label_123 | Label |
| Button_123 | Button |

It is possible that distinct types of tags are used for input, label, button, etc., depending upon the type of user interface. Therefore, a generic algorithm can be used to classify the tags. The classification of tags can be performed via a naive Bayes classifier, large language models, or the like.

Classification of tags using a classification algorithm such as a Naive Bayes Classifier can be used. Naive Bayes classifiers can be a simple yet effective technique for text classification tasks. The extracted features from the HTML elements, such as tag names, attributes, and textual content can classified by a Naive Bayes classifier into distinct categories (e.g., HTML tags in the example).

Large language models can be used for classification. Large language models such as GPT-X, which already have sufficient context of HTML can also be used to classify tags. A suitable prompt can be prepared and then the tags (or list of tags) can be passed to the large language model application programming interface (API) to generate the classification of the tags.

### Example 30 - Example Implementation: Vector Embeddings for Labels

Labels can be used to identify if the page or the element contains an answer to the natural language query (or not). To be able to locate the most relevant user interface and element during runtime, metadata of the labels can be pre-processed during runtime in a way that allows easy search and retrieval during runtime. One way to do so is to generate vector embeddings for the labels available on the different pages and persisting the embeddings as a vector representation in a database.

Embeddings can take the form of numerical representations of words, phrases, or sentences in a continuous vector space. They can be used for searching based on semantics and context. Embeddings for label metadata can be generated during design time via a large language model (e.g., an embeddings large language model that outputs embeddings) applied to a user interface element (e.g., label) and its metadata. The vector embeddings can be stored in a vector database.

During runtime, a vector embedding can be generated for the natural language query; then the vector database can be queried to find the best possible (e.g., top N) matches (results) based on the user's query.

**Table 6 - Vector Embeddings**

| **Tag ID** | **Element Type** | **Label Description** | **Label Description Vector Representation** |
|---|---|---|---|
| Page1 | Label1 | Contract Header Details | 0.12, 0.14656, 1.02 ... |

### Example 31 - Example Architecture for Label Identification

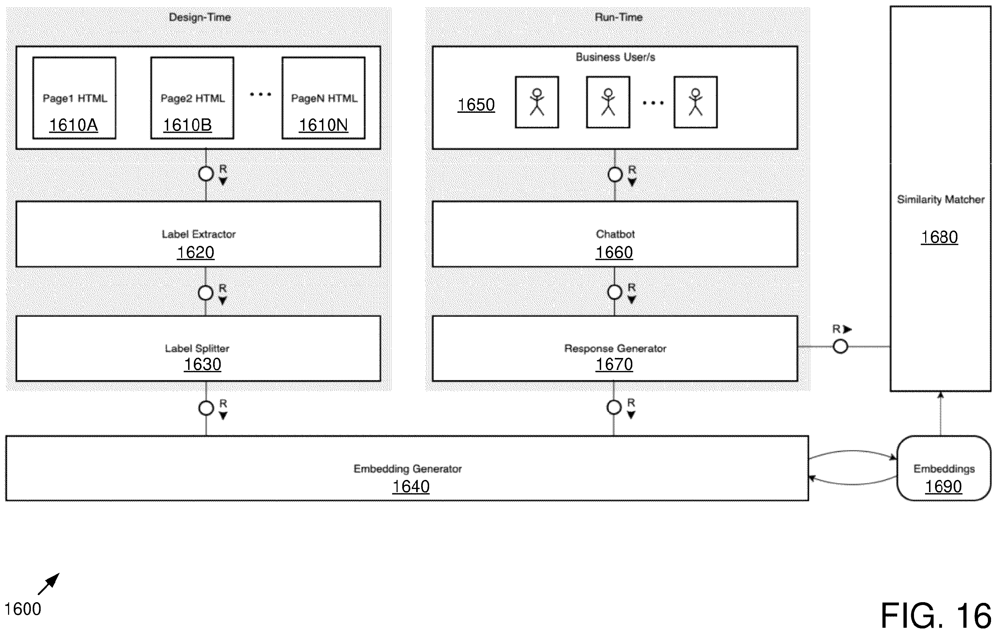

FIG. 16 is a block diagram of an example architecture 1600 for label (terminus user interface element) identification for a user query. The label can serve as the terminus user interface element described herein (e.g., a path to the query's answer).

In the example, at design time, the various application pages 1610A-N are navigated, and labels are extracted by a label extractor 1620. The labels can be split by a label splitter 1630, and vector embeddings 1690 generated for the labels using the generator 1640.

Similarly, when runtime queries come in from user accounts 1650 via a chatbot interface 1660, a response generator 1670 (e.g., runtime orchestrator) can generate a vector embedding for the incoming natural language query using the generator 1640 and find a top N matching labels using the similarity matcher 1680 (e.g., an implementation of the vector embeddings comparer 830).

### Example 32 - Example User Interface Showing Filter

In some scenarios, such as SAP Fiori implementations, Application pages (e.g., screens) typically have input filter values on list pages, analytical dashboards, or the like. The source of input values in the fields can be a list of fixed values or dynamic transactional / master data values. Various sources can be used to acquire candidate parameter input values for use during natural language query processing. In some cases, the sources for candidate parameter input values can be drawn from value help (e.g., prompts provided to users in a user interface to assist in completing the user interface fields).

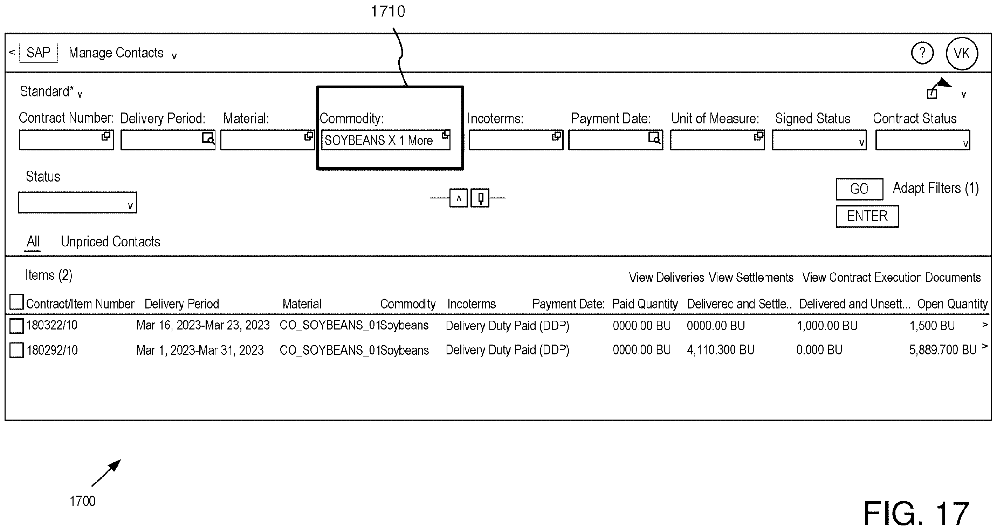

FIG. 17 is a screenshot of a user interface 1700 showing an example filter parameter. In the example, the field "Commodity" 1710 can take the value "SOYBEANS" and serves as a filter (e.g., only items with commodity equal to SOYBEANS are shown). In practice, various other values (e.g., BARLEY, COCOA BEANS, and the like) can be possible filter values.

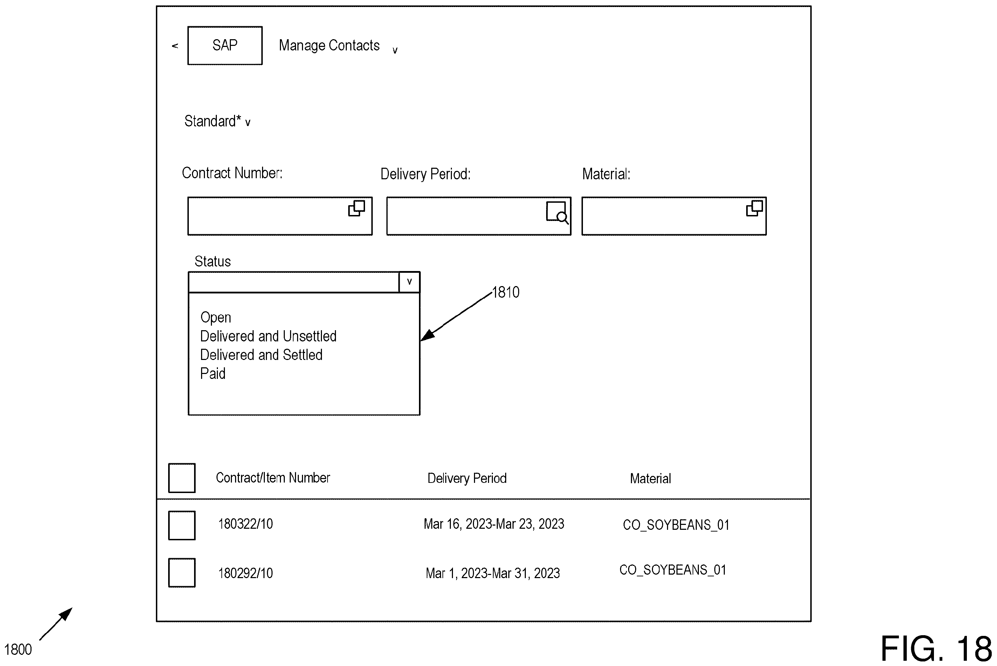

Another source of candidate parameter input values can be from fixed values. FIG. 18 is an screenshot of an example user interface 1800 showing fixed values in value help that can be used in any of the examples herein. In the example, the values 1810 "Open," "Delivered and Unsettled," "Delivered and Settled," and "Paid" are shown. Such values can be incorporated as candidate parameter input values. When an incoming query uses such parameters (e.g., "Show open June contracts"), the query indication of an input value can be matched to "Open."

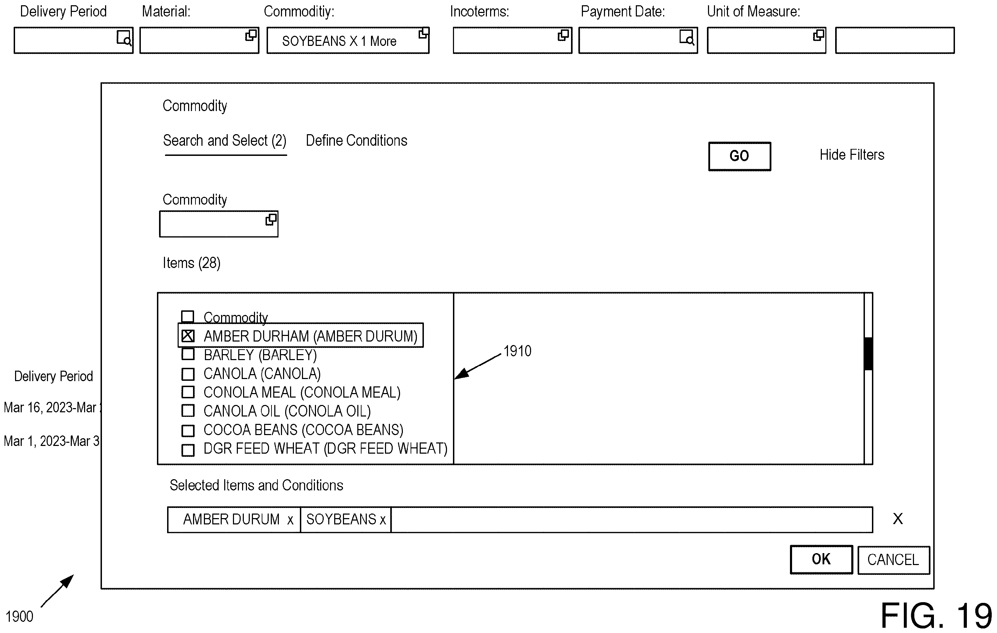

Another source of values is from dynamic values. FIG. 19 is screenshot of an example user interface 1900 showing dynamic values in value help that can be used in any of the examples herein. In the example, a list of values 1910 provides a list of candidate parameter input values. One or more can be selected, so various permutations or an indication of the possibility of permutation can be stored.

Because the graph is intended to represent a complete set of possible web pages available within the different user interface applications, the test data in the mock system can be chosen to be sufficient to provide input values at different input placeholders in the user interface. For some applications, input values can be available in value help, so a value can also be selected randomly during graph generation if desired.

However, the values provided by input help values available during design time can vary from the actual values available during runtime because the runtime system uses a customer's (e.g., tenant's) tenant-specific data. Therefore, the source from where the input help values is determined can be selected accordingly. At least three possible sources are possible: Direct extract from user interface value help during design time, destinations approach, and developers tooling approach.

The direct extract from user interface value help during design time approach can directly extract and persist values from the user interface during design time. Such an approach can work relatively well for a small set of fixed input values; however, cases where the list of values is quite lengthy can be avoided because the automation tool scrolls through the complete list. If the direct extract approach is used, the values can be persisted as shown:

**Table 7 - Direct Extract**

| **Input ID** | **Page ID** | **Possible Values** |
|---|---|---|
| Input_1 | Page_1 | A, B, C |

In a destinations approach, given the data for value help can be extracted via application programming interfaces (APIs), it is possible to get the APIs configured by the customers. For example, in an SAP system, customers in SAP Business Technology Platform (BTP) Destinations can be used. Administrators at the customer's end can be involved because the API endpoints, credentials, etc. may vary from tenant to tenant, and the service provider may not have such context.

After the destination is configured, it can be queried at runtime to get the list of possible values for the input value help.

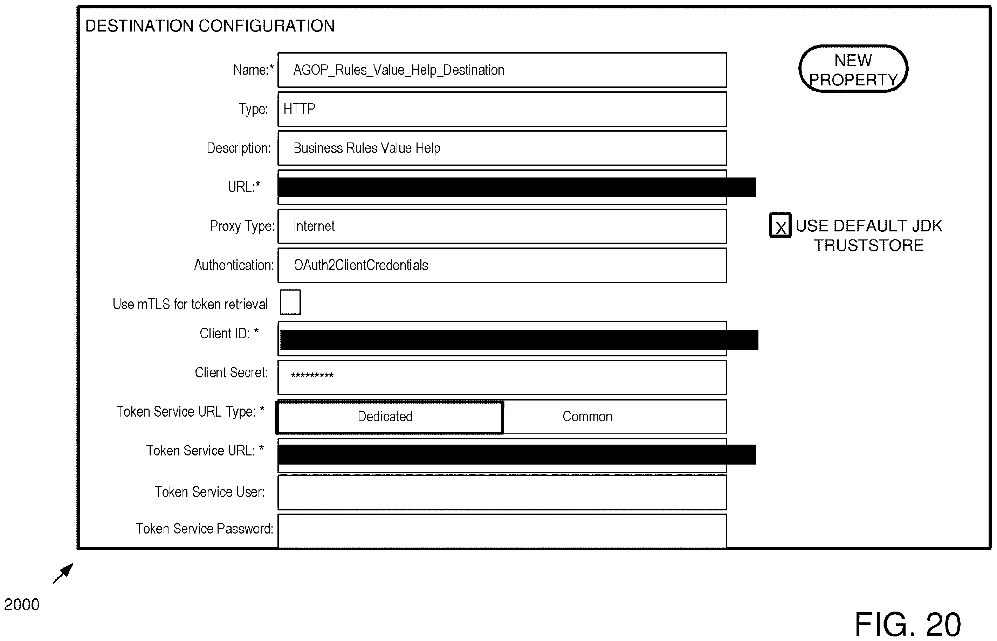

Such an approach can be more secure but involves additional effort on the tenant's side. FIG. 20 is screenshot of an example user interface 2000 showing a destination that can be used in any of the examples herein. In the example, a source of candidate parameter input values can be specified. The user interface 2000 depicts a configuration setup (e.g., "destination setup") where the details of the tenant (e.g., endpoint and the authentical credentials) are maintained. The details are mapped to the different systems that are present in the graph. Each system can have its own logon entry point where the credentials are needed to proceed.

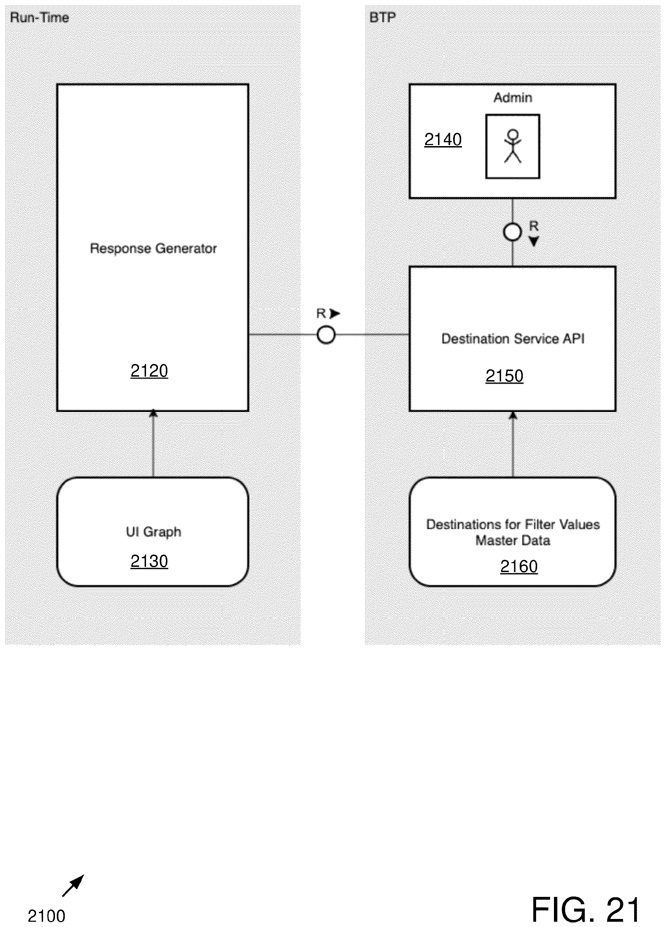

FIG. 21 is a block diagram of an example architecture 2100 implementing a destination approach that can be used in any of the examples herein. In the example, the graph representation 2130 can be built using a response generator 2120 that leverages a destination service API 2150 to find possible values. Destinations for filter values master data 2160 can vary from tenant to tenant, and an admin account 2140 can provide details and credentials for accessing the API 2150.

The source of information for value help can be persisted as shown:

**Table 8 - Destinations**

| **Input ID** | **Page ID** | **Value Help URL** |
|---|---|---|
| Input_1 | Page_1 | commodity@abc.com |

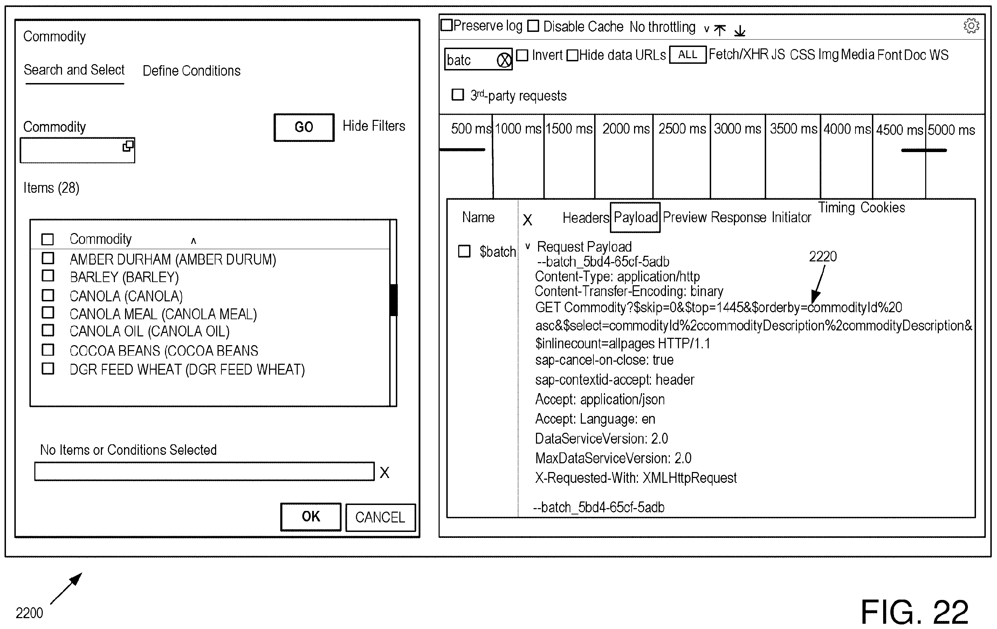

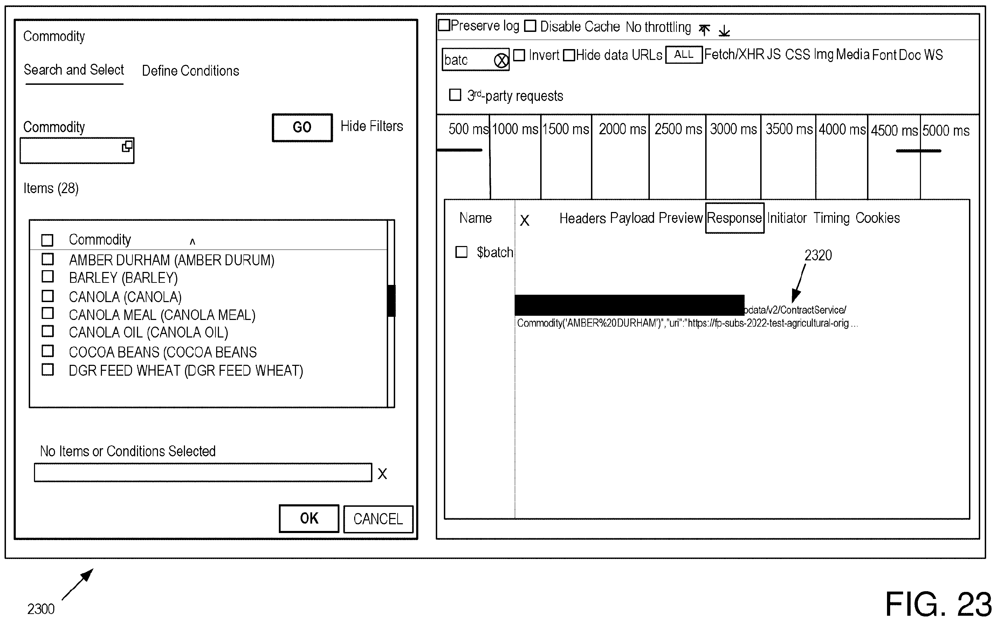

In a developers tooling approach, it is possible to extract the API used in value help along with the complete response from the API using browser plugin tools. The same can also be automated via Python libraries. FIG. 22 is a screenshot 2200 showing example extraction of a value help API via browser developer tools that can be used in any of the examples herein. FIG. 23 is a screenshot 2300 showing example extraction of a value help API response via browser developer tools that can be used in any of the examples herein.

The developers tooling approach can leverage the browser debugging tools to extract the corresponding APIs from the customer system in the pre-usage (preruntime) phase. In the pre-usage phase in the tenant's landscape, the automation tool can execute the steps to trigger value help API by requesting the possible values of value help. Then, the developer tooling can identify the batch calls 2220 in the user interface and extract the response 2320 for them, which may differ by tenant.

Such an approach can have constraints due to security restrictions in a tenant's landscape. The approach can sometimes be combined with the destinations approach to automate certain aspects in destination configuration.

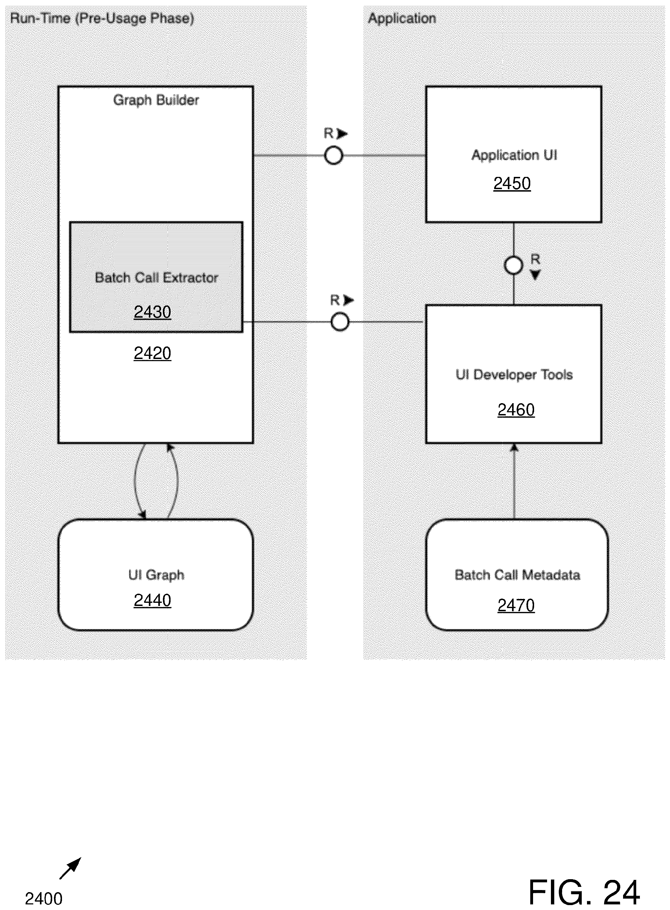

FIG. 24 is a screenshot showing an example architecture 2400 implementing a developer tooling approach for input value help source determination that can be used in any of the examples herein. The graph builder 2420 builds the graph 2440 by navigating within the application user interface 2450 and determines input values with a batch call extractor 2430 that interfaces with user interface developer tools 2460 to locate batch call metadata 2470 that can be used to extract possible input values.

The source of information for value help can be persisted as shown:

**Table 9 - Developer Tooling Approach**

| **Input ID** | **Page ID** | **Value Help URL** | **Value Help Values** |
|---|---|---|---|
| Input_1 | Page_1 | commodity@abc.com | Abe, zyz, def |

### Example 33 - Example Solution Approach for Implementation

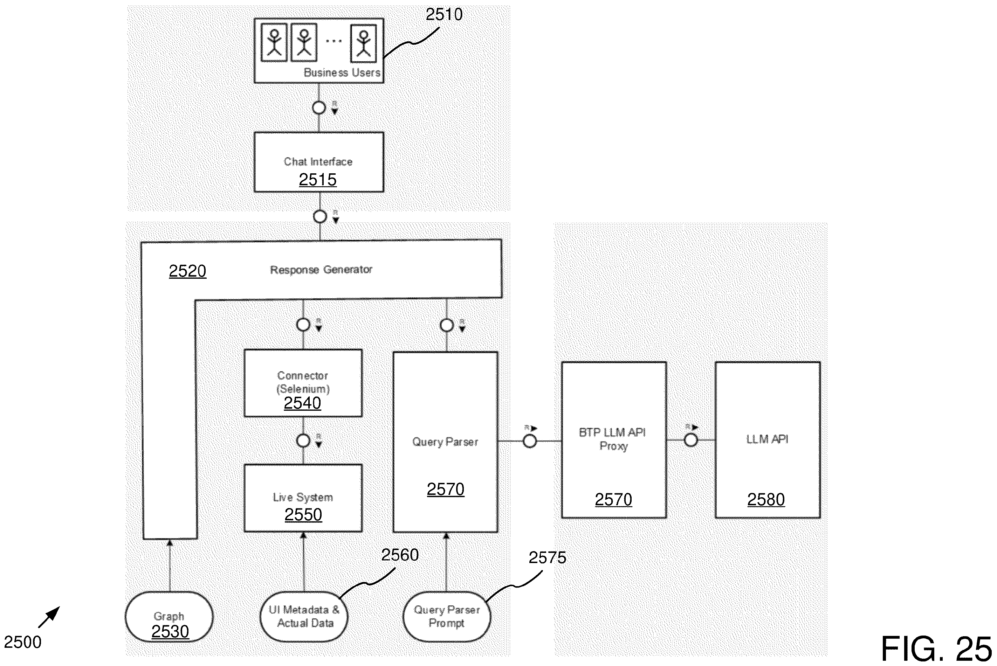

An example solution approach at runtime involves user query processing via a chat interface, query parsing, contextual page determination, input value determination, user interface automation and rendering, and query result presentation. FIG. 25 is a block diagram of an example architecture 2500 generating intelligent responses at runtime via a user interface graph that can be used in any of the examples herein.

A chat (e.g., chatbot) interface 2515 can be a typical interface to receive a natural language query from a user account 2510 about enterprise data in a domain as described herein. The interface can enable a conversational flow with the user.

A response generator 2520 can be used to help build the graph representation 2530. A connector tool 2540 can access a live system 2550 that has underlying user interface metadata and actual data (e.g., tenant-specific data) 2560. A prompt 2575 can be provided to the query parser 2570 that accessed a large language model API 2580 via a proxy 2570.

After receiving the natural language query, relevant context can be extracted from the query, which can be achieved by passing the query to a large language model to understand the user's intent and extract key entities or terms from the query.

After the relevant entities and terms are determined, the most appropriate application, page, and user interface element can be determined where the requested information is likely to be found. The following can be performed:

First, a vector embedding can be generated for the natural language query, similar to the technique described above for generating vector embeddings for user interface elements (e.g., incorporating user interface metadata).

A vector search can be performed on the vector database (e.g., internal representations of user interface elements) comprising vector representation of the user interface labels described herein. The top N (e.g., 5, 10, 20, or the like) matches can be retrieved as results by the vector search.

The top N results can be passed to the large language model API along with the user's query to determine the best possible match (e.g., actual query versus user interface element, including metadata).

Input value determination can be performed from the natural language query. The filter input value pairs can be determined by a large language model using a chain-of-thought prompt. For example, given the following query:
# Query = "What is the Payment terms for contract number 180322 and commodity SOYBEANS."

Using the following prompt for the large language model:
prompt = f""" You are given a user query in the form of string:
{self, query}.
Your task is to identify from the user query, intended input value pairs.
You first scan the user query and understand what element user wants to
enter input in and what value is user wants to enter in the element.
Don't give code or any explanatory text, just give the element and the input value pair in j son format.
"""

The filter, input value pairs are as follows:

**Table 10 - Large Language Model Output**

| **Filter** | **Input Value** |
|---|---|
| Contract Number | 180322 |
| Commodity | SOYBEANS |

Because the input is in natural language, it is possible that the values provided might vary from the actual values accepted in the user interface of the application. The appropriate value help API can be selected based on the filter parameters using a large language model. The following prompt can be used to extract the relative entity (API) for getting the possible values:
prompt = f""" You are given an entity set {value_help_entity_set} which is in json format, which contains all the entities for value help.
You are also given an element-value pair list: {element value_pairs},
which is
the overall list of elements and input values required.
Your task is to identify the most relevant entity (best possible match and
only one per element) from the entity set that matches the respective element in the element value pair list.
The most relevant entity should either be a synonym, or could be a spelling correctness, upper case lower case etc, of the element, but should not be a different word altogether.
If no relevant entity is found for the element as per the above logic, output entity should be "Not Found".
Don't give code or any explanatory text, just give the list of elements along with the corresponding entity only from the entity set provided.
For e.g., if the entity set contains ("Name", "Age", "Address", "Sex", "Personality") and the element value pairs are ("FULL NAME": "ABC"
and "Years of Birth": "5", "Gender": "Male", "PersonalID": "123456") the
output should ("FULL NAME": "Name", "Years of Birth":"Age",
"Gender": "Sex",
"PersonalID": "Not Found"))
"""

In case the values are fixed values, the same can be accessed directly. If the input values for the input entity are supposed to be fetched by an API, then the API can be called to extract the candidate values. After the values are extracted, the following prompt can be called to get the exact value to be input in the value help:
#Asking the LLM to retrieve the match from the webpage:
prompt = f""" You are given a json list of values {filtered_json} which is in json format, which contains all the possible input values for value help. You are also given an input value: {input_value}, which is intended to be entered as an input. Your task is to find the most appropriate value (only one), from the list of values that matches the input. Don't give code or any explanatory text, just give the most appropriate value as output (usually a single word). """

After determining input values, navigation is performed to the appropriate page (e.g., via step-by-step navigation via the graph representation or via a URL directly, or the like) based on the approach used. After the automation tool navigates to the page, the value for the appropriate element (e.g., destination user interface element as identified earlier) is extracted.

The results received from the user interface element can be passed to a large language model to prepare the answer in the format which is desired by the user. The following prompt can be used:
prompt = f""" You are given a normalized HTML of a webpage:
{normalized HTML}, which contains all the texts on a webpage.
Now the webpage consists of some titles or labels and their values, which
are present in the normalized HTML given to you.
You are also given a user query: {Query}, in which user is asking for a certain value or values, your task is to figure out exactly what the user is asking and output its value in a formal way.
Don't give code or any explanatory text, just present the output and answer the user's query in a polite and formal way.
"""

The output in natural language format can be output in the chat interface to provide a concise and meaningful response to the user's query, potentially with additional context or visual aids.

### Example 34 - Example Launchpad User Interface

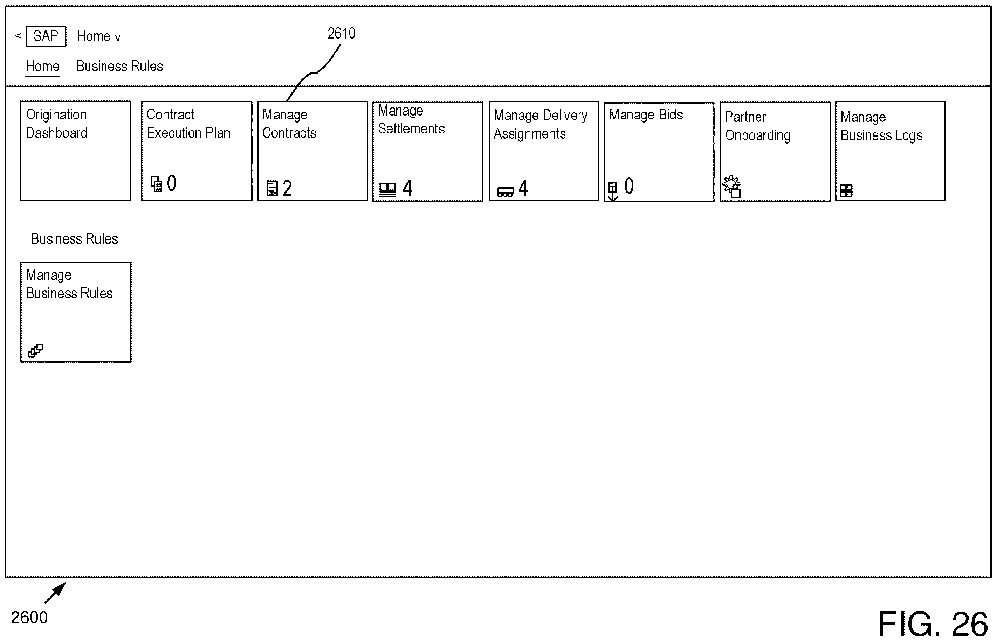

FIG. 26 is a screenshot of an example launchpad user interface 2600 that can be used in any of the examples herein. In the example, a user interface element 2610 for launching an application for "manage contracts" is included.

### Example 35 - Example UI Graph Snapshot

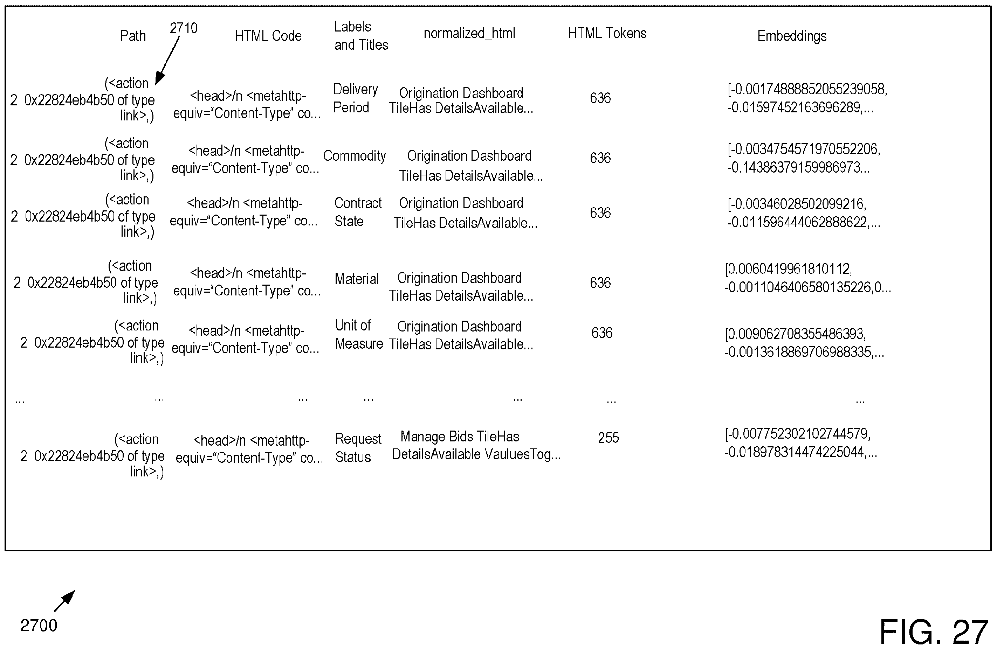

FIG. 27 is a block diagram of an example user interface graph snapshot 2700 that can be used in any of the examples herein. In the example, a path 2710, HTML code, labels and titles, normalized_html, number of HTML tokens, and embeddings are included.

### Example 36 - Example Implementations

Any of the following can be implemented.
Clause 1. A computer-implemented method comprising:
   receiving a natural language query;
   determining a terminus user interface element out of a plurality of user interface elements of an application having a plurality of pages, wherein determining the terminus user interface element comprises, with a large language model, finding a user interface element matching the natural language query via internal representations of the user interface elements, wherein user interface element metadata is incorporated into the internal representations of the user interface elements;
   navigating to a given page out of the plurality of pages of the application on which the terminus user interface element appears;
   from the given page, extracting answer data for the terminus user interface element;
   presenting the answer data as an answer to the natural language query.
Clause 2. The method of Clause 1, wherein:
   the internal representations of the user interface elements comprise respective vector embeddings calculated based on the metadata incorporated into the internal representations of the user interface elements; and
   finding a matching user interface element comprises:
   computing a vector embedding of the natural language query; and
      for the vector embedding of the natural language query, finding a matching vector embedding out of the respective vector embeddings, wherein the matching vector embedding is associated with the terminus user interface element;
Clause 3. The method of Clause 2, wherein:
   finding the matching vector embedding comprises finding a top N matching embeddings; and
   the large language model comprises a completion large language model that chooses the terminus user interface element out of the top N matching embeddings.
Clause 4. The method of any one of Clauses 2-3, wherein:
   the respective vector embeddings are pre-calculated before the natural language query is received.
Clause 5. The method of any one of Clauses 1-4, wherein:
   navigating to a given page out of the plurality of pages of the application on which the terminus user interface element appears comprises:
   finding the given page in a graph representation of the plurality of pages of the application, wherein the graph representation stores a path of the given page; and
   navigating to the path of the given page.
Clause 6. The method of Clause 5, further comprising:
   with a large language model, classifying tags appearing in the plurality of pages as being of different element types;
   wherein the different element types comprise input, label, and button.
Clause 7. The method of any one of Clauses 5-6, wherein:
   the graph representation comprises edges indicating how to navigate between the plurality of pages.
Clause 8. The method of any one of Clauses 5-7, wherein:
   the path comprises a Uniform Resource Locator of a page.
Clause 9. The method of any one of Clauses 5-8, wherein:
   the path comprises a starting page, and one or more user interface actions to navigate from the starting page to the given page; and
   browser automation applies the one or more user interface actions to navigate to the given page.
Clause 10. The method of any one of Clauses 1-9, wherein:
   presenting the answer data as an answer to the natural language query comprises generating, with a large language model, a natural language answer with the answer data.
Clause 11. The method of any one of Clauses 1-10, wherein the method further comprises:
   extracting one or more input value indications from the natural language query;
   determining parameter input values based on the input value indications; and
   submitting the one or more parameter input value indications to the application.
Clause 12. The method of Clause 11, wherein:
   determining parameter input values based on the input value indications comprises:
   with a large language model, choosing from among a list of candidate parameter input values based on the one or more input value indications.
Clause 13. The method of Clause 12, wherein:
   the list of candidate parameter input values are fetched with an API call.
Clause 14. The method of any one of Clauses 12-13, wherein:
   the list of candidate parameter input values are fetched from a list provided by the application.
Clause 15. The method of any one of Clauses 12-14, wherein:
   the list of candidate parameter input values are prefetched before receiving the natural language query.
Clause 16. A computing system comprising:
   at least one hardware processor;
   at least one memory coupled to the at least one hardware processor;
   a graph representation of a plurality of user interface pages of an application, wherein the graph representation comprises nodes for the user interface pages and edges indicating how to navigate between the user interface pages;
   internal representations of user interface elements appearing in the user interface pages of the application, wherein the internal representations incorporate user interface element metadata;
   a large language model trained with HTML context; and
   one or more non-transitory computer-readable media having stored therein computer-executable instructions that, when executed by the computing system, cause the computing system to perform:
   receiving a natural language query;
   with the large language model, identifying an internal representation out of the internal representations of user interface elements as matching the natural language query, wherein the internal representation represents a terminus user interface element and incorporates user interface element metadata;
   navigating to a terminus page out of the plurality of user interface pages of the application on which the terminus user interface element appears;
   from the terminus page, extracting a value for the terminus user interface element; and
   presenting the value as an answer to the natural language query.
Clause 17. The system of Clause 16, further comprising:
   a stored list of possible input values; and
   an additional large language model configured to choose one of the possible input values based on an indication of an input value extracted from the natural language query.
Clause 18. The system of any one of Clauses 16-17, wherein the one or more non-transitory computer-readable media have stored therein computer-executable instructions that, when executed by the computing system, cause the computing system to perform:
   with the large language model or another large language model, accepting the natural language query and the value as input and, based on a prompt to present an answer to the natural language query, outputting the value in a natural language format that answers the natural language query.
Clause 19. The system of any one of Clauses 16-18, further comprising:
   a stored indication of an API from which candidate parameter input values can be fetched.
Clause 20. One or more non-transitory computer-readable media comprising computer-executable instructions that, when executed by a computing system, cause the computing system to perform operations comprising:
   receiving a natural language query;
   determining a terminus user interface element out of a plurality of user interface elements of an application having a plurality of pages, wherein determining the terminus user interface element comprises, with a large language model, finding a matching user interface element as the terminus user interface element via internal representations of the user interface elements, wherein user interface element metadata is incorporated into the internal representations of the user interface elements, wherein the large language model performs semantic matching that goes beyond exact matches;
   with a large language model, choosing a parameter input value from a plurality of candidate parameter input values based on an indication of an input value in the natural language query;
   navigating to a given page out of the plurality of pages of the application on which the terminus user interface element appears;
   from the given page, extracting a value for the terminus user interface element; and
   presenting the value as an answer to the natural language query.
Clause 21. One or more non-transitory computer-readable media comprising computer-executable instructions that, when executed by a computing system, cause the computing system to perform the method of any one of Clauses 1-15.

### Example 37 - Example Advantages

A number of advantages can be achieved via the technologies described herein. For example, semantics-rich labels from user interface metadata can leveraged to answer user queries.

User queries can be answered without passing any sensitive business data to the large language model. The determination done via the large language model can find the appropriate elements on the user interface, and the underlying data is not needed for doing so.

Business users can have an improved user experience and interact with complex user interfaces using natural language, reducing the learning curve and making the interaction more intuitive.

Efficient information retrieval can be implemented because users can quickly access relevant information without manually navigating through the user interface, leading to time savings and increased productivity.

A reduced cognitive load can result because the system handles user interface interactions, allowing users to focus on formulating queries and interpreting results.

Scalability results because the system can be adapted to various user interfaces and applications, providing a unified and consistent query experience.

Data-driven insights result because analysis of user interactions and queries can provide valuable insights into user behavior and preferences.

The system can be further extended to render user interface elements from a web page directly within the chat interface.

### Example 38 - Example Computing Systems

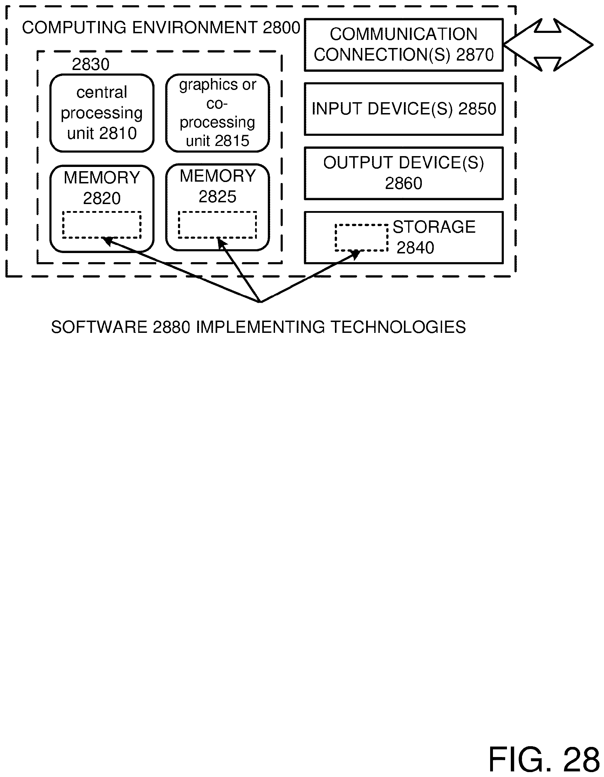

FIG. 28 depicts an example of a suitable computing system 2800 in which the described innovations can be implemented. The computing system 2800 is not intended to suggest any limitation as to scope of use or functionality of the present disclosure, as the innovations can be implemented in diverse computing systems.

With reference to FIG. 28, the computing system 2800 includes one or more processing units 2810, 2815 and memory 2820, 2825. In FIG. 28, this basic configuration 2830 is included within a dashed line. The processing units 2810, 2815 execute computer-executable instructions, such as for implementing the features described in the examples herein. A processing unit can be a general-purpose central processing unit (CPU), processor in an application-specific integrated circuit (ASIC), or any other type of processor. In a multi-processing system, multiple processing units execute computer-executable instructions to increase processing power. For example, FIG. 28 shows a central processing unit 2810 as well as a graphics processing unit or co-processing unit 2815. The tangible memory 2820, 2825 can be volatile memory (e.g., registers, cache, RAM), non-volatile memory (e.g., ROM, EEPROM, flash memory, etc.), or some combination of the two, accessible by the processing unit(s) 2810, 2815. The memory 2820, 2825 stores software 2880 implementing one or more innovations described herein, in the form of computer-executable instructions suitable for execution by the processing unit(s) 2810, 2815.

A computing system 2800 can have additional features. For example, the computing system 2800 includes storage 2840, one or more input devices 2850, one or more output devices 2860, and one or more communication connections 2870, including input devices, output devices, and communication connections for interacting with a user. An interconnection mechanism (not shown) such as a bus, controller, or network interconnects the components of the computing system 2800. Typically, operating system software (not shown) provides an operating environment for other software executing in the computing system 2800, and coordinates activities of the components of the computing system 2800.

The tangible storage 2840 can be removable or non-removable, and includes magnetic disks, magnetic tapes or cassettes, CD-ROMs, DVDs, or any other medium which can be used to store information in a non-transitory way and which can be accessed within the computing system 2800. The storage 2840 stores instructions for the software 2880 implementing one or more innovations described herein.

The input device(s) 2850 can be an input device such as a keyboard, mouse, pen, or trackball, a voice input device, a scanning device, touch device (e.g., touchpad, display, or the like) or another device that provides input to the computing system 2800. The output device(s) 2860 can be a display, printer, speaker, CD-writer, or another device that provides output from the computing system 2800.

The communication connection(s) 2870 enable communication over a communication medium to another computing entity. The communication medium conveys information such as computer-executable instructions, audio or video input or output, or other data in a modulated data signal. A modulated data signal is a signal that has one or more of its characteristics set or changed in such a manner as to encode information in the signal. By way of example, and not limitation, communication media can use an electrical, optical, RF, or other carrier.

The innovations can be described in the context of computer-executable instructions, such as those included in program modules, being executed in a computing system on a target real or virtual processor (e.g., which is ultimately executed on one or more hardware processors). Generally, program modules or components include routines, programs, libraries, objects, classes, components, data structures, etc. that perform particular tasks or implement particular abstract data types. The functionality of the program modules can be combined or split between program modules as desired in various embodiments. Computer-executable instructions for program modules can be executed within a local or distributed computing system.

For the sake of presentation, the detailed description uses terms like "determine" and "use" to describe computer operations in a computing system. These terms are high-level descriptions for operations performed by a computer and should not be confused with acts performed by a human being. The actual computer operations corresponding to these terms vary depending on implementation.

### Example 39 - Computer-Readable Media

Any of the computer-readable media herein can be non-transitory (e.g., volatile memory such as DRAM or SRAM, nonvolatile memory such as magnetic storage, optical storage, or the like) and/or tangible. Any of the storing actions described herein can be implemented by storing in one or more computer-readable media (e.g., computer-readable storage media or other tangible media). Any of the things (e.g., data created and used during implementation) described as stored can be stored in one or more computer-readable media (e.g., computer-readable storage media or other tangible media). Computer-readable media can be limited to implementations not consisting of a signal.

Any of the methods described herein can be implemented by computer-executable instructions in (e.g., stored on, encoded on, or the like) one or more computer-readable media (e.g., computer-readable storage media or other tangible media) or one or more computer-readable storage devices (e.g., memory, magnetic storage, optical storage, or the like). Such instructions can cause a computing system to perform the method. The technologies described herein can be implemented in a variety of programming languages.

### Example 40 - Example Cloud Computing Environment

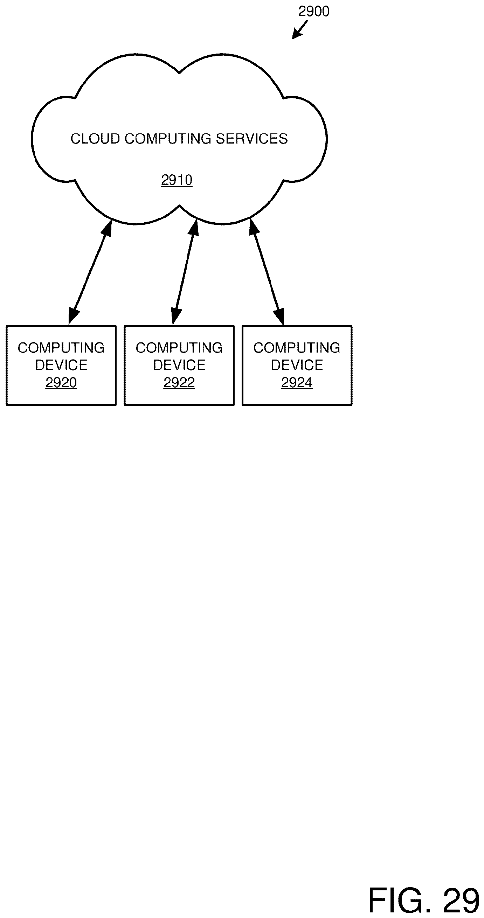

FIG. 29 depicts an example cloud computing environment 2900 in which the described technologies can be implemented, including, e.g., the system 100 of FIG. 1 and other systems herein. The cloud computing environment 2900 comprises cloud computing services 2910. The cloud computing services 2910 can comprise various types of cloud computing resources, such as computer servers, data storage repositories, networking resources, etc. The cloud computing services 2910 can be centrally located (e.g., provided by a data center of a business or organization) or distributed (e.g., provided by various computing resources located at different locations, such as different data centers and/or located in different cities or countries).

The cloud computing services 2910 are utilized by various types of computing devices (e.g., client computing devices), such as computing devices 2920, 2922, and 2924. For example, the computing devices (e.g., 2920, 2922, and 2924) can be computers (e.g., desktop or laptop computers), mobile devices (e.g., tablet computers or smart phones), or other types of computing devices. For example, the computing devices (e.g., 2920, 2922, and 2924) can utilize the cloud computing services 2910 to perform computing operations (e.g., data processing, data storage, and the like).

In practice, cloud-based, on-premises-based, or hybrid scenarios can be supported.

### Example 41 - Example Implementations

Although the operations of some of the disclosed methods are described in a particular, sequential order for convenient presentation, such manner of description encompasses rearrangement, unless a particular ordering is required by specific language set forth herein. For example, operations described sequentially can in some cases be rearranged or performed concurrently.

### Example 42 - Example Alternatives

The technologies from any example can be combined with the technologies described in any one or more of the other examples. In view of the many possible embodiments to which the principles of the disclosed technology can be applied, it should be recognized that the illustrated embodiments are examples of the disclosed technology and should not be taken as a limitation on the scope of the disclosed technology. Rather, the scope of the disclosed technology includes what is covered by the scope and spirit of the following claims.

## Claims

1. A computer-implemented method comprising:
receiving a natural language query;
determining a terminus user interface element out of a plurality of user interface elements of an application having a plurality of pages, wherein determining the terminus user interface element comprises, with a large language model, finding a user interface element matching the natural language query via internal representations of the user interface elements, wherein user interface element metadata is incorporated into the internal representations of the user interface elements;
navigating to a given page out of the plurality of pages of the application on which the terminus user interface element appears;
from the given page, extracting answer data for the terminus user interface element;
presenting the answer data as an answer to the natural language query.

2. The method of claim 1, wherein:
the internal representations of the user interface elements comprise respective vector embeddings calculated based on the metadata incorporated into the internal representations of the user interface elements; and
finding a matching user interface element comprises:
computing a vector embedding of the natural language query; and
for the vector embedding of the natural language query, finding a matching vector embedding out of the respective vector embeddings, wherein the matching vector embedding is associated with the terminus user interface element;

3. The method of claim 2, wherein:
finding the matching vector embedding comprises finding a top N matching embeddings; and
the large language model comprises a completion large language model that chooses the terminus user interface element out of the top N matching embeddings.

4. The method of claim 2 or 3, wherein:
the respective vector embeddings are pre-calculated before the natural language query is received.

5. The method of any one of claims 1 to 4, wherein:
navigating to a given page out of the plurality of pages of the application on which the terminus user interface element appears comprises:
finding the given page in a graph representation of the plurality of pages of the application, wherein the graph representation stores a path of the given page; and
navigating to the path of the given page.

6. The method of claim 5, further comprising:
with a large language model, classifying tags appearing in the plurality of pages as being of different element types;
wherein the different element types comprise input, label, and button.

7. The method of claim 5 or 6, wherein:
the graph representation comprises edges indicating how to navigate between the plurality of pages; and/or
wherein:
the path comprises a Uniform Resource Locator of a page.

8. The method of any one of claims 5 to 7, wherein:
the path comprises a starting page, and one or more user interface actions to navigate from the starting page to the given page; and
browser automation applies the one or more user interface actions to navigate to the given page.

9. The method of any one of claims 1 to 8, wherein:
presenting the answer data as an answer to the natural language query comprises generating, with a large language model, a natural language answer with the answer data.

10. The method of any one of claims 1 to 9, wherein the method further comprises:
extracting one or more input value indications from the natural language query;
determining parameter input values based on the input value indications; and
submitting the one or more parameter input value indications to the application,
wherein:
optionally, determining parameter input values based on the input value indications comprises:
with a large language model, choosing from among a list of candidate parameter input values based on the one or more input value indications, and/or
wherein:
optionally, the list of candidate parameter input values are fetched with an API call, and/or
wherein:
optionally, the list of candidate parameter input values are fetched from a list provided by the application, and/or
wherein:
optionally, the list of candidate parameter input values are prefetched before receiving the natural language query.

11. A computing system comprising:
at least one hardware processor;
at least one memory coupled to the at least one hardware processor;
a graph representation of a plurality of user interface pages of an application, wherein the graph representation comprises nodes for the user interface pages and edges indicating how to navigate between the user interface pages;
internal representations of user interface elements appearing in the user interface pages of the application, wherein the internal representations incorporate user interface element metadata;
a large language model trained with HTML context; and
one or more non-transitory computer-readable media having stored therein computer-executable instructions that, when executed by the computing system, cause the computing system to perform:
receiving a natural language query;
with the large language model, identifying an internal representation out of the internal representations of user interface elements as matching the natural language query, wherein the internal representation represents a terminus user interface element and incorporates user interface element metadata;
navigating to a terminus page out of the plurality of user interface pages of the application on which the terminus user interface element appears;
from the terminus page, extracting a value for the terminus user interface element; and
presenting the value as an answer to the natural language query.

12. The system of claim 11, further comprising:
a stored list of possible input values; and
an additional large language model configured to choose one of the possible input values based on an indication of an input value extracted from the natural language query.

13. The system of claim 11 or 12, wherein the one or more non-transitory computer-readable media have stored therein computer-executable instructions that, when executed by the computing system, cause the computing system to perform:
with the large language model or another large language model, accepting the natural language query and the value as input and, based on a prompt to present an answer to the natural language query, outputting the value in a natural language format that answers the natural language query.

14. The system of any one of claims 11 to 13, further comprising:
a stored indication of an API from which candidate parameter input values can be fetched.

15. One or more non-transitory computer-readable media comprising computer-executable instructions that, when executed by a computing system, cause the computing system to perform operations comprising:
receiving a natural language query;
determining a terminus user interface element out of a plurality of user interface elements of an application having a plurality of pages, wherein determining the terminus user interface element comprises, with a large language model, finding a matching user interface element as the terminus user interface element via internal representations of the user interface elements, wherein user interface element metadata is incorporated into the internal representations of the user interface elements, wherein the large language model performs semantic matching that goes beyond exact matches;
with a large language model, choosing a parameter input value from a plurality of candidate parameter input values based on an indication of an input value in the natural language query;
navigating to a given page out of the plurality of pages of the application on which the terminus user interface element appears;
from the given page, extracting a value for the terminus user interface element; and
presenting the value as an answer to the natural language query.
